(19) Europäisches Patentamt
European Patent Office
Office européen des brevets

(11) **EP 1 923 299 B1**

(12) **EUROPEAN PATENT SPECIFICATION**

(45) Date of publication and mention
of the grant of the patent:
**01.09.2010 Bulletin 2010/35**

(51) Int Cl.:
***B62D 15/02*** *(2006.01)*    ***G01D 5/14*** *(2006.01)*

(21) Application number: **07022485.2**

(22) Date of filing: **20.11.2007**

(54) **Absolute steering angle detecting device**

Vorrichtung zur Erkennung eines absoluten Lenkwinkels

Dispositif de détection d'angle de braquage absolu

(84) Designated Contracting States:
**DE FR**

(30) Priority: 20.11.2006 JP 2006312512
11.04.2007 JP 2007103443

(43) Date of publication of application:
**21.05.2008 Bulletin 2008/21**

(73) Proprietor: **NSK Ltd.**
**Tokyo 141-8560 (JP)**

(72) Inventors:
• **Wei, Yong**
**Maebashi-shi**
**Gunma 371-8527 (JP)**

• **Hara, Takeshi**
**Fujisawa-shi**
**Kanagawa 251-8501 (JP)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A- 1 342 647    EP-A- 1 666 837**
**JP-A- 2002 303 536**

**Description**

The present invention relates to an absolute steering angle detecting device for detecting an absolute steering angle of a steering control device (such as a steering wheel) of a vehicle.

As an absolute steering angle detecting device of this type, there is, for example, an absolute steering angle detecting device which was proposed previously by the applicant of this subject patent application and which is described in EP 1 666 837 A1.

The conventional example described in EP 1 666 837 A1 is a steering angle sensor adapted to calculate a rotational angle of a steering wheel by detecting a rotational angle of a steering system in which a steering assist is implemented via a reduction mechanism by driving an electric motor. In the conventional example, there is provided a sensor wheel adapted to operate while linking with rotation of a steering shaft; an absolute angle operation unit which calculates an absolute steering angle based on a steering angle signal from the sensor wheel; and a GMR element and a magnetized portion provided so as to surround the GMR element on the sensor wheel. A rotational angle is detected by regarding two rotations of the steering shaft as one period based on a change in a resistance value of the GMR element which is obtained by changing the direction of a magnetic field in association with rotation of the magnetized portion.

In the conventional example described in EP 1 666 837 A1 described above, a steering angle signal of one period can be obtained by two rotations of the steering wheel. Assuming that an overall or a lock-to-lock rotational angle of the steering wheel is ±600°, since a steering angle of one period can be obtained by a rotation angle of 720°, assuming that an intermediate position of one period is a neutral point steering angle, one period equals ±360° in leftward and rightward rotations, and the remaining rotational angle of 240° to the leftward and rightward from the intermediate position overlaps in value the one period which includes the neutral point steering angle. However, an absolute steering angle can be determined uniformly within a range of +120° to -120°.

Consequently, although the detection speed of absolute steering angle can be made fast, since the steering angle per rotation becomes double that of a one-rotation steering angle detecting system in which a steering angle of one period is made to be obtained by one rotation of a steering wheel, there still remains an unsolved problem of resolution and linearity being worsened double when compared with the one-rotation steering angle detecting system.

The present invention has been made in view of the unsolved problem inherent in the conventional example, and an object thereof is to provide an absolute steering angle detecting device which can detect an absolute steering angle quickly while maintaining the resolution and linearity provided by the one-rotation steering angle detecting system by detecting an absolute steering angle of one period through one rotation of a steering wheel.

The above and other objects of the invention are achieved by an absolute steering angle detecting device according to claim 1. Preferred embodiments are claimed in the dependent claims.

According to a first aspect of the invention, there is provided an absolute steering angle detecting device for detecting an absolute steering angle of a steering control device of a vehicle, including:

a steering angle detection unit which detects a sensor-steering-angle based on a single rotation of the steering control device being used as a single period;
a neutral point storage unit which stores a neutral point position detected by the steering angle detection unit at a steering angle neutral point of the steering angle;
a steering angle range estimation unit which estimates a steering angle range to which the current steering angle belongs, wherein the steering angle range is made up of:

a neutral steering angle range corresponding to one period which includes the neutral position stored in the neutral point storage unit; and
a plurality of left and right steering angle ranges which are formed on both sides of the neutral steering angle range; and
an absolute steering angle calculation unit which calculates an absolute steering angle based on the estimated steering angle range, the detected sensor-steering-angle and the stored neutral point position.

Additionally, according to a second aspect of the invention, there is provided the absolute steering angle detecting device as set forth in the first aspect of the invention, wherein
the neutral point storage unit is made up of a nonvolatile memory.

Furthermore, according to a third aspect of the invention, there is provided the absolute steering angle detecting device as set forth in the first aspect of the invention, wherein
the steering angle range estimation unit includes a steering angle range shift controller module which changes the steering angle ranges when a variation in the detected sensor-steering-angle is equal to or larger than a predetermined threshold value.

In addition, according to a fourth aspect of the invention, there is provided the absolute steering angle detecting device as set forth in the first aspect of the invention, wherein
the steering angle range estimation unit includes a steering angle range shift controller module which calculates a variation in output from the steering angle detection unit and changes the steering angle ranges when the calculated variation is equal to or larger than a predetermined threshold value.

Furthermore, according to a fifth aspect of the invention, there is provided the absolute steering angle detecting device as set forth in the first aspect of the invention, wherein
there is provided a wheel speed detection unit which detects wheel speeds of the vehicle,
wherein the steering angle range estimation unit includes a steering angle estimation module which roughly estimates an absolute steering angle based on wheel speeds detected by the wheel speed detection unit, and the steering angle range estimation unit estimates the steering angle range to which the detected sensor-steering-angle belongs based on the roughly estimated steering angle.

In addition, according to a sixth aspect of the invention, there is provided the absolute steering angle detecting device as set forth in the fifth aspect of the invention, wherein
the steering angle estimation unit includes;

a first steering angle estimation module which calculates a first estimated steering angle based on wheel speeds of left and right driven wheels,
a second steering angle estimation module which calculates a second estimated steering angle based on wheels speeds of left and right driving wheels, and
an estimated steering angle determination module which determines the first estimated steering angle as an estimated steering angle when a deviation between the calculated first and second steering angles is less than a predetermined value.

Furthermore, according to a seventh aspect of the invention, there is provided the absolute steering angle detecting device as set forth in the fifth aspect of the invention, wherein the steering angle estimation unit includes:

a vehicle speed detection module which detects the vehicle speed of the vehicle; and
a self-aligning torque estimation module which detects a self-aligning torque of the vehicle,
wherein an estimated steering angle is estimated based on the detected vehicle speed and the detected self-aligning torque.

In addition, according to an eighth aspect of the invention, there is provided the absolute steering angle detecting device as set forth in the seventh aspect of the invention, wherein
the steering angle estimation unit calculates an estimated steering angle by referring to an estimated steering angle calculation map which uses the self-aligning torque and the vehicle speed as parameters.

Furthermore, according to a ninth aspect of the invention, there is provided the absolute steering angle detecting device as set forth in the first aspect of the invention, wherein
there is provided:

a wheel speed detection unit which detects wheel speeds of the vehicle; and
a final steering angle storage module which stores a final absolute steering angle in an immediately preceding driving, wherein the steering angle range estimation unit includes:
a primary steering angle estimation module which roughly estimates a primary absolute steering angle based on the wheel speeds;
a temporary steering angle range calculation module which calculates a temporary steering angle range based on the stored final absolute steering angle, the detected sensor-steering-angle and the stored neutral point position; and
a secondary absolute steering angle estimation module which estimates a secondary absolute steering angle based on the temporary steering angle range, the detected sensor-steering-angle and the stored neutral point position, wherein the steering angle range estimation unit outputs the temporary steering angle range as a final value when a deviation between the primary and secondary absolute steering angles falls within a predetermined value.

Fig. 1 is an overall configuration diagram showing the first embodiment of the invention;

Fig. 2 is a sectional view showing a reduction mechanism and a steering angle sensor;

Fig. 3 is a waveform diagram showing output signals from a magnetism detector;

Fig. 4 is a characteristic diagram showing a steering angle sensor output value which is outputted from a steering angle sensor;

Fig. 5 is a block diagram showing a specific configuration of a control unit according to the first embodiment;

Fig. 6 is a flowchart showing an example of an initial turn number determining operation procedure which is executed by an absolute steering angle calculation module;

Fig. 7 is a flowchart showing an example of an absolute steering angle determining operation procedure which is executed by the absolute steering angle calculation module;

Fig. 8 is an explanatory diagram which is used to explain a turn number shift state;

Fig. 9 is a block diagram showing a specific configuration of a steering wheel return control module;

Fig. 10 is a block diagram of a control unit according to a second embodiment of the invention;

Fig.11 is an exemplary diagram which is used to explain a self-aligning torque;

Fig. 12 is a block diagram showing a specific configuration of an absolute steering angle calculation module;

Fig. 13 is a flowchart showing an example of an initial turn number determining operation procedure executed by the absolute steering angle calculation module;

Fig. 14 is a characteristic diagram showing an estimated steering angle calculation map;

Fig. 15 is a block diagram showing a third embodiment of the invention;

Fig. 16 is a flowchart showing an example of an absolute steering angle storing operation procedure in the third embodiment ;

Fig. 17 is a flowchart showing an example of an initial turn number determining operation procedure in the third embodiment;

Fig. 18 is a block diagram showing a fourth embodiment of the invention;

Fig. 19 is a flowchart showing an example of an initial turn number determining operation procedure in the fourth embodiment; and

Fig. 20 is a configuration diagram showing another example of a steering angle sensor.

Herebelow, embodiments, of the invention will be described based on the accompanying drawings.

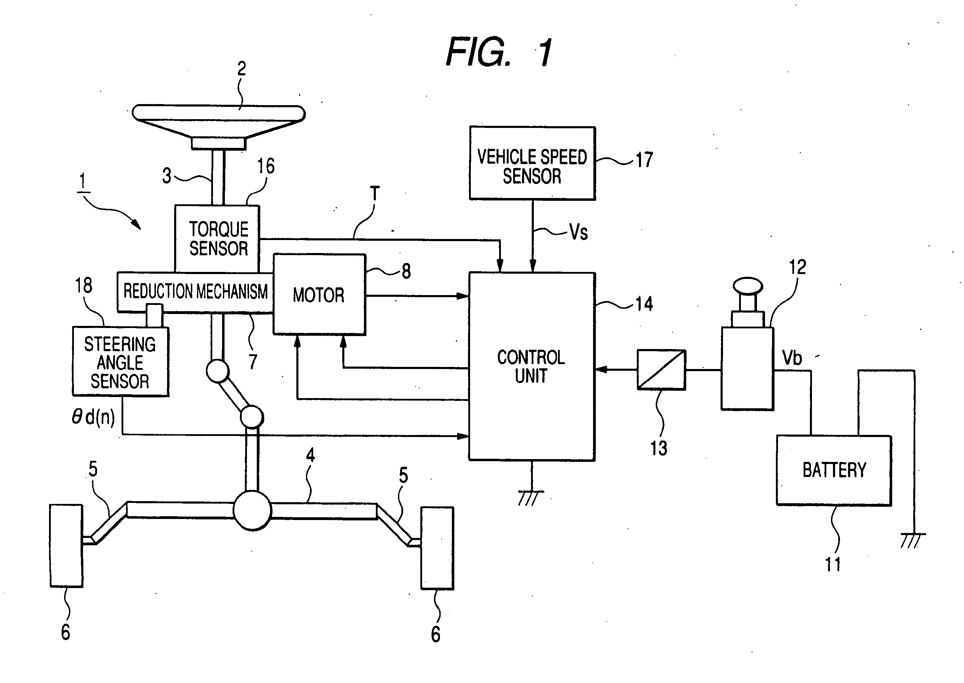

Fig. 1 is an overall configuration diagram showing an embodiment of the invention, in Fig. 1, reference numeral 1 denotes a steering system, which includes a steering shaft 3 on which a steering wheel 2 is mounted, a rack-and-pinion mechanism 4 which is connected to an opposite end of the steering shaft 3 to the end where the steering wheel 2 is mounted, and left and right steered road wheels 6 which are connected to the rack-and-pinion mechanism 4 via connecting mechanisms 5 such as tie rods.

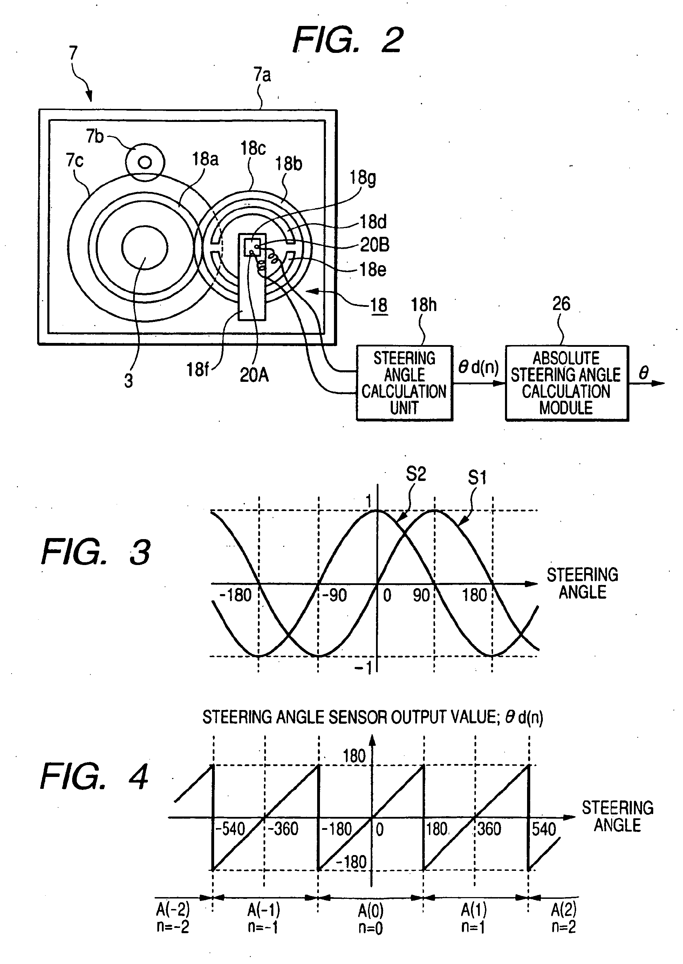

An electric motor 8 is connected to the steering shaft 3 via a reduction mechanism 7 which is made up, for example, of a worm gear. Here, as is shown in Fig. 2, the reduction mechanism 7 is made up of a worm 7b which is connected, for example, to an output shaft of the electric motor 8 and a worm wheel 7c which is provided on the steering shaft 3 in such a manner as to mesh with the worm 7b, the worm 7b and the worm wheel 7c being accommodated in a gear housing 7a.

The electric motor 8 operates as a steering assist force generating motor for generating a steering assist force for an electric power steering system. The electric motor 8 is then driven and controlled by a control unit 14 to which a battery voltage Vb which is outputted from a battery 11 equipped on the vehicle is supplied via an ignition switch 12 and a fuse 13.
Inputted into the control unit 14 are a steering wheel torque T, which is detected by a steering torque sensor 16 provided on the steering shaft 3 and is inputted into the steering wheel 2, a vehicle speed detection value Vs which is detected by a vehicle speed sensor 17 which functions as a vehicle speed detection unit, and furthermore, a steering angle sensor output value θd(n) which is detected by a steering angle sensor 18 which functions as a steering angle detection unit built in the reduction mechanism 7.

Here, the steering torque sensor 16 is such as to detect a steering wheel torque which is exerted on the steering wheel 2 and is then transmitted to the steering shaft 3. Also, the steering torque sensor 16 is configured, for example, such that the steering wheel torque is converted into a twisting angle displacement of a torsion bar interposed between an input shaft and an output shaft, which are all not shown. This twisting angle displacement is detected by a magnetic signal, and the magnetic signal so detected is converted into an electric signal.

As is shown in Fig. 2, the steering angle sensor 18 is made up of

a spur gear 18a having a predetermined number of teeth and provided in parallel with the worm wheel 7c making up the reduction mechanism 7 and connected to the steering shaft 3,

a sensor wheel 18c having a toothed portion having the same number of teeth as that of the spur gear 18a which is formed on a circumferential surface thereof in such a manner as to mesh with the spur gear 18a,

a pair of magnetized portions 18d and 18e magnetized to a North pole (N-pole) and a south pole (S-pole), respectively, which are each formed into a semicircular arc-like shape on one side of the sensor wheel 18c,

a magnetism detector 18g which is held at a distal end of a supporting piece 18f which is provided in the gear housing 7a in such a manner as to be disposed in a position which faces a central point position between the magnetized portions 18d and 18e and

a steering angle calculation unit 18h which calculates a steering angle detection signal based on a detection signal which is outputted from the magnetism detector 18g.

Here, the magnetism detector 18g includes a pair of GMR (Giant Magneto Resistance) bridge circuits 20A, 20B having first and second GMR elements (magnetic resistance elements), respectively, which are adapted to detect a change in a magnetic field from the magnetized portions 18d and 18e. Sine wave-like magnetism detection signals S1 and S2 whose phases shift 90° as shown in Fig. 3 are outputted from the first and second GMR bridge circuits 20A and 20B to the steering angle calculation unit 18h according to the angle of the sensor wheel 18c.

The steering operation unit 18h performs an operation expressed by Equation 1 below based on the magnetism detection signals S1 and S2 which are outputted from the first and second GMR bridge circuits 20A and 20B of the magnetism detector 18g, respectively, so as to calculate a steering angle sensor output value θd(n) shown in Fig. 4 and then outputs the steering angle sensor output value θd(n) so calculated to the control unit 14.

$$\theta d(n) = \arctan (S1/S2) \qquad \ldots . (1)$$

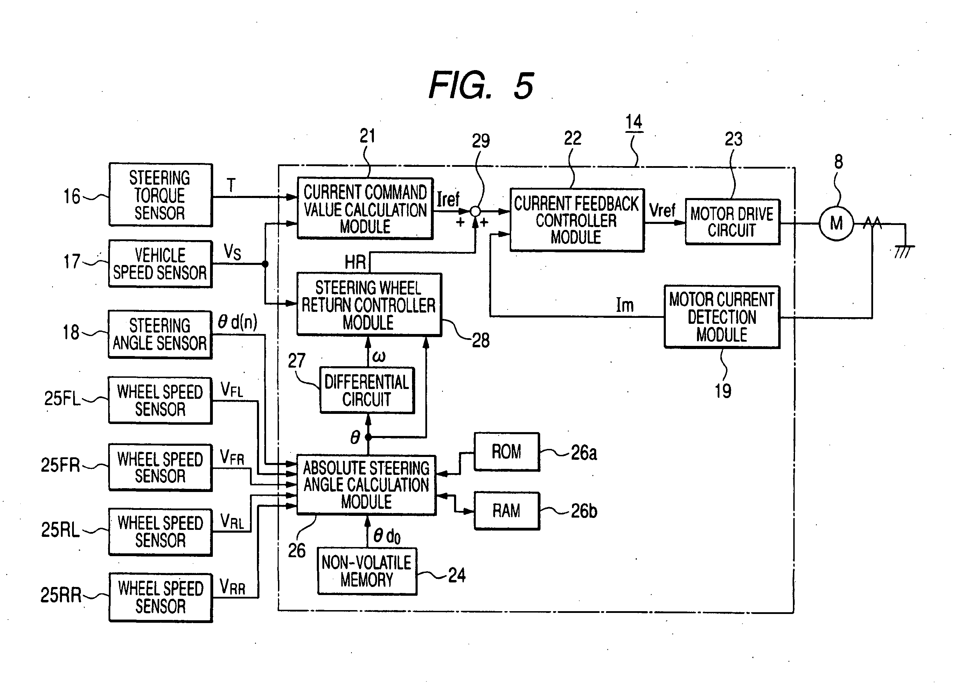

The control unit 14 is made up, for example, of a microcomputer and is configured as shown in Fig. 5 when it is shown in the form of a functional block diagram.

Namely, the control unit 14 includes

a current command value calculation module 21 which calculates a current command value Iref to the electric motor 8 based on a steering wheel torque T detected by the steering wheel torque sensor 16 and a vehicle speed Vs detected by the vehicle speed sensor 17,

a current feedback controller module 22 for performing a current feedback operation based on the current command value Iref calculated by the current command value calculation module 21 and a motor current Im detected by a motor current detector module 19 so as to calculate a voltage command value Vref, and

a motor drive circuit 23 for controlling the electric motor 8 into which the voltage command value Vref calculated by the current feedback controller module 22 is inputted.

In addition, the control unit 14 further includes

a non-volatile memory 24, which functions as a neutral point recording unit which stores a neutral point detection value θd0 which is outputted from the steering angle sensor 18 when the steering wheel 2 is turned or returned to a neutral position or a steering angle which is formed when the vehicle travels straight ahead,

an absolute steering angle calculation module 26 which calculates an absolute steering angle θ based on the neutral point detection value θd0 which is stored in the non-volatile memory 24, the steering angle output value θd(n) detected by the steering angle sensor 18 and wheel speeds $V_{FL}$ to $V_{RR}$ which are inputted from wheel speed sensors 25FL to 25RR for detecting wheels speeds of four wheels of, for example, a rear-drive vehicle,

a differential circuit 27 for calculating an absolute steering speed ω by differentiating the absolute steering angle θ calculated by the absolute steering angle calculation module 26,

a steering wheel return controller module 28 for performing, based on the absolute steering angle θ calculated by the absolute steering angle calculation module 26, the absolute steering speed ω calculated by the differential circuit 27 and the vehicle speed detection value Vs, a so-called steering wheel return control in which the steering wheel 2 is returned to the neutral point position when the steering effort exerted on the steering wheel is relaxed while the steering wheel 2 is being turned, and

an adder 29 for adding together a steering wheel return control signal HR calculated by the steering wheel return controller module 28 and the current command value Iref outputted from the current command value calculation module 21 for supply to the current feedback control module 22.

Here, a steering angle sensor output value θd which is outputted from the steering angle sensor 18 when the steering wheel 2 is positioned in the neutral position at which the vehicle is allowed to travel straight ahead is stored as the neutral point detection value θd0 in the non-volatile memory 24 when the steering system 1 is finally adjusted before the vehicle is shipped from the factory.

In addition, connected to the absolute steering angle calculation module 26 are a ROM 26a which stores various programs for an initial turn number determining operation and an absolute steering angle calculating operation which are executed by the absolute steering angle calculation module 26 and a RAM 26b for storing values which are necessary during execution of the respective operations in the absolute steering angle calculation module 26.

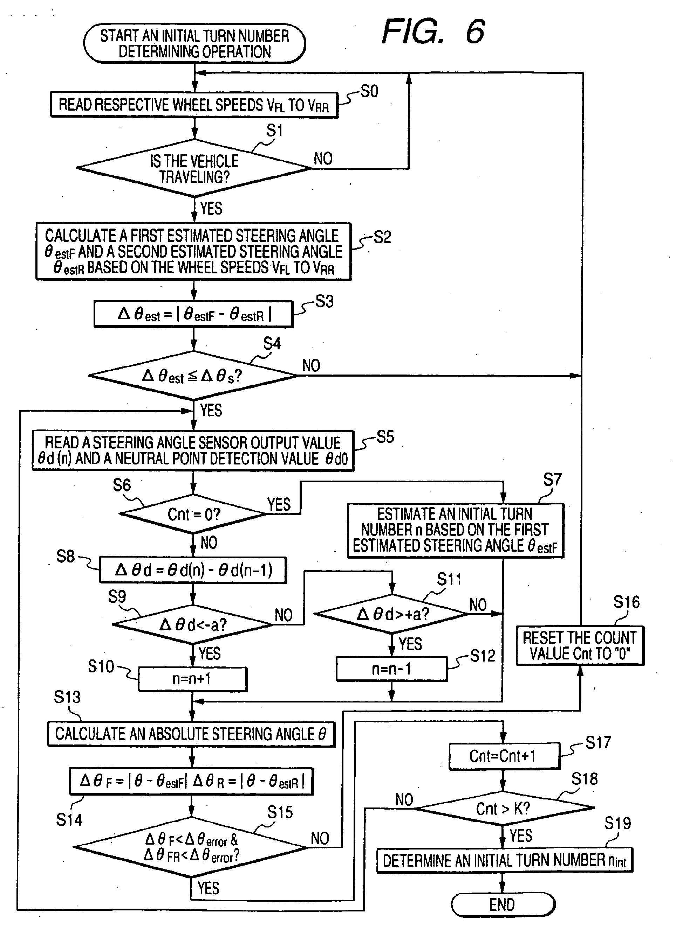

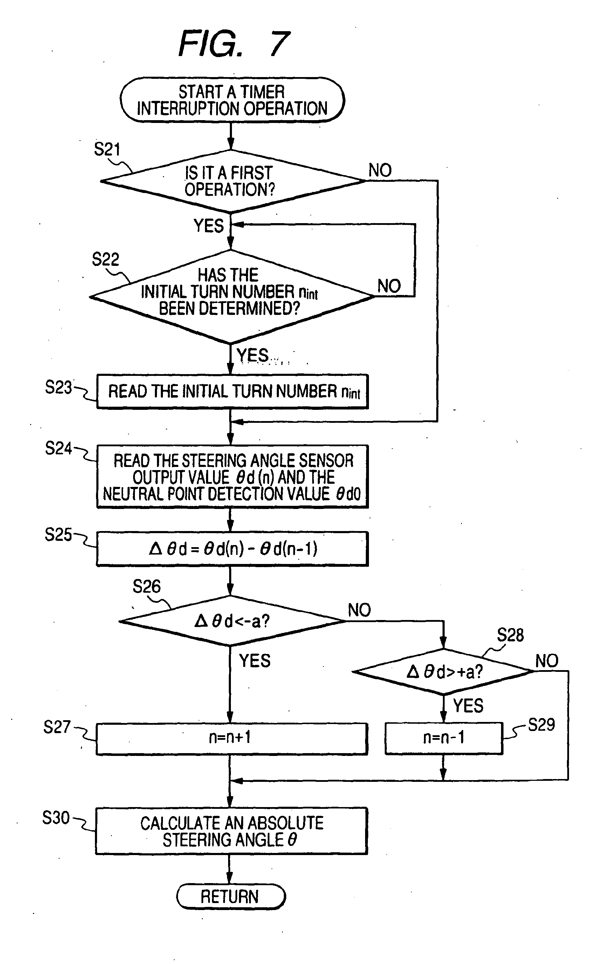

In addition, the absolute steering angle calculation module 26 performs an initial absolute steering angle calculating operation shown in Fig. 6 and an absolute steering angle calculating operation shown in Fig. 7 based on the neutral point detection value θd0 read out from the non-volatile memory 24. The steering angle sensor output value θd (n) which is inputted from the steering sensor 18 and the wheel speeds $V_{FL}$ to $V_{RR}$ which are inputted from the wheel speed sensors 25FL to 25RR so as to calculate an absolute steering angle θ.

In the initial absolute steering angle calculating operation shown in Fig. 6, firstly, at step S0, wheel speeds $V_{FL}$ to $V_{RR}$ are read from the wheel speed sensors 25FL to 25RR. Following this, the operation flow proceeds to step S1, where it is determined whether or not all the wheel speeds VFL to VRR have reached or exceeded a predetermined value which is set to be in the vicinity of "0" to thereby bring the vehicle into a running state. If the vehicle is determined to still remain in a halt state, the operation flow returns to the step S0 to wait until the vehicle is brought into a running state. When the vehicle is brought into the running state, the operation flow proceeds to step S2.

At the step S2, by performing operations expressed by Equation 2 and Equation 3 below based on the wheel speeds $V_{FL}$ to $V_{RR}$, a first estimated steering angle $\theta_{estF}$ based on the wheels speeds of the front wheels and a second estimated steering angle $\theta_{estR}$ based on the wheel speeds of the rear wheels are calculated.

$$\sin (2\theta_{estF}) = k_F (V_{FL} - V_{FR})/(V_{FL} + V_{FR}) \quad \ldots \quad (2)$$

$$\tan \theta_{estR} = k_R (V_{RL} - V_{RR})/(V_{RF} + V_{RR}) \quad \ldots \quad (3)$$

where, $V_{FL}$ denotes the wheel speed of the front left wheel, $V_{FR}$ denotes the wheel speed of the front right wheel, $V_{RL}$ denotes the wheels speeds of the rear left wheel, $V_{RR}$ denotes the wheel speed of the rear right wheel and $k_F$ and $k_R$ are constant values.

Next, the operation flow proceeds to step S3, where a steering angle deviation $\Delta\theta_{est}$ (= |$\theta_{estF}$ - $\theta_{estR}$|) between the first estimated steering angle $\theta_{estF}$ and the second estimated steering angle $\theta_{estR}$ by subtracting the second estimated steering angle $\theta_{estR}$ from the first estimated steering angle $\theta_{estF}$.

Following this, the operation flow proceeds to step S4, where whether or not the calculated steering angle deviation $\Delta\theta_{est}$ is equal to or less than a set value $\Delta\theta s$ which is set in advance is determined. If $\Delta\theta_{est} > \Delta\theta s$, it is determined that the steering angle deviation $\Delta\theta_{est}$ is large and the reliability of the first estimated steering angle $\theta_{estF}$ calculated based on the front wheels which are driven wheels is low, and the operation flow returns to the step S0. On the other hand, if $\Delta\theta_{est} \leq \Delta\theta s$, it is determined that the steering angle deviation $\Delta\theta_{est}$ is small and the reliability of the first estimated steering angle $\theta_{estF}$ calculated based on the front wheels which are driven wheels is high, and the operation flow proceeds to step S5.

At the step S5, the steering angle sensor outputs value θd(n) which is inputted from the steering angle sensor 18 and the neutral point detection value θd0 which is stored in the non-volatile memory 24 are read out. Then, the operation flow proceeds to step S6, where whether or not a count value Cnt, which will be described later, is reset to "0" is determined, and if Cnt = 0, the operation flow proceeds to step S7.

At this step S7, an initial value of a turn number n which determines a steering angle existing area "An", where an actual steering angle exists, is estimated from the first estimated steering angle $\theta_{estF}$. The steering angle sensor outputs value θd(n) which is outputted from the steering angle sensor 18, and the operation flow then proceeds to step S13. Namely, in a case shown in Fig. 4, when defining a range from -180° to 180° which includes a neutral point detection value θd0 = 0° as a neutral steering angle range A(0), a range of 180° to 540° which results when the steering wheel 2 is turned rightwards from the neutral steering angle range A(0) as a right steering angle range A(1), a range exceeding 540° which results when the steering wheel 2 is turned further rightwards as a right steering angle range A(2), a range of -180° to -540° which results when the steering wheel 2 is turned leftwards from the neutral steering angle range A(0) as a left steering angle range A(-1) and a range exceeding -540° which results when the steering wheel 2 is turned further leftwards as a left steering angle range A(-2), the steering angle sensor output value θd(n) is understood to exist in any steering angle range A(n) of the steering angle ranges so defined. Consequently, an initial value of the turn number n can be estimated by determining in which of the steering angle ranges A(-2) to A(2) the actual steering angle exists from the first estimated steering angle θ_estF and the steering angle sensor output value θd(n) .

In addition, when the result of the determination made in the step S6 indicates Cnt > 0, the operation flow proceeds to step S8, where an output variation Δθd is calculated by subtracting an immediately preceding steering angle sensor output value θd(n-1) from the current steering angle sensor output value θd(n), and the operation flow then proceeds to step S9.

At this step S9, whether or not the output variation Δθd is smaller than a turn number shift determination threshold value -a is determined, and if Δθd < -a, judging that the turn number n is increased, the operation flow then proceeds to step S10, where a value resulting from addition of "1" to the current turn number n is set as a new turn number n, and the operation flow then proceeds to step S13.

In contrast, if the result of the determination at the step S9 indicates Δθd ≥ -a, the operation flow proceeds to step S11, where whether the output variation Δθd is larger than a turn number shift determination threshold value +a is determined, and if Δθd > +a, judging that the turn number n is decreased, the operation flow then proceeds to step S12, where a value resulting from subtraction of "1" from the current turn number n is set as a new turn number n, and the operation flow then proceeds to step S13, whereas if the result of the determination at the step S12 indicates Δθd ≤ +a, judging that there is no change in the turn number n, the operation flow proceeds directly to step S13.

At the step S13, an operation expressed by Equation 4 below is performed based on the steering angle sensor output value θd(n), the neutral point detection value θd0 and the turn number n so as to calculate an absolute steering angle θ.

$$\theta = \theta d(n) - \theta d0 + n \times 360 \quad \ldots \ldots (4)$$

Following this, the operation flow proceeds to step S14, where a first steering angle deviation $\Delta\theta_F$ (= |θ - θ_estF|) which is expressed by an absolute value of a value resulting by subtracting the first estimated steering angle θ_estF from the absolute steering angle θ calculated at the step S13 and a second steering angle deviation $\Delta\theta_R$ (= |θ - θ_estR|) which is expressed by an absolute value of a value resulting by subtracting the second estimated steering angle θ_estR from the absolute steering angle θ are calculated, and the operation flow proceeds to step S15.

At this step S15, whether or not the first steering angle deviation $\Delta\theta_F$ is less than a set value $\Delta\theta_{error}$ which represents a permissible error range is determined, and similarly, whether or not the second steering angle deviation $\Delta\theta_R$ is less than the set value $\Delta\theta_{error}$ which represents the permissible error range is determined. If $\Delta\theta_F \geq \Delta\theta_{error}$, or $\Delta\theta_R \geq \Delta\theta_{error}$, or $\Delta\theta_F \geq \Delta\theta_{error}$ and $\Delta\theta_R \geq \Delta\theta_{error}$, judging that the error is large and the reliability of the absolute steering angle θ is low, the operation flow proceeds to step S16, where the count value Cnt, which will be described later, is reset to "0", and the operation flow returns to the step S0.

On the other hand, if the result of the determination at the step S15 indicates that both the first steering angle deviation $\Delta\theta_F$ and the second steering angle deviation $\Delta\theta_R$ are less than the set value $\Delta\theta_{error}$ which represents the permissible error range, judging that the reliability of the absolute steering angle θ is high, the operation flow proceeds to step S17, where a new count value Cnt is calculated which results by adding "1" to the current count value Cnt, and the operation flow then proceeds to step S18.

At this step S18, whether or not the count value Cnt has surpassed a set value K which has been set in advance is determined, and if Cnt ≤ K, judging that there exists a possibility that the turn number n is unstable, the operation flow returns to the step S5, whereas if Cnt > K, judging that the turn number n is stable, the operation flow proceeds to step S19, where the turn number n is determined as an initial turn number $n_{int}$, and thereafter, the initial absolute steering angle calculating operation is ended.

In operations shown in Fig. 6, the operations at the steps S0 to S2 correspond to the steering angle estimation unit, the operations at the step S7 corresponds to the steering angle range estimation module and the operations at the steps S8 to S12 correspond to the steering angle shift control modulation.

In addition, the absolute steering angle calculating operation shown in Fig. 7 is executed as a timer interruption operation which is performed every a predetermined period of time (for example, 10 msec). Firstly, at step S21, whether or not it is a first absolute steering angle calculating operation since the ignition switch 12 is put in an on state is determined, and if it is determined that it is not the first steering angle calculating operation, the operation flow jumps to step S24. Whereas if it is the first steering angle calculating operation, the operation flow proceeds to step S22, whether or not the initial turn number $n_{int}$ has been determined in the initial absolute steering angle calculating operation is determined, and if the initial turn number $n_{int}$ has not been determined yet, the operation flow waits until the initial turn number $n_{int}$

has been determined. whereas the initial turn number $n_{int}$ has been determined, the operation flow proceeds to step S23, where the initial turn number $n_{int}$ is read, and the operation flow then proceeds to step S24.

At this step S24, the steering angle sensor output value θd(n) which has been detected by the steering angle sensor 18 is read, and the neutral point detection value θd0 which is stored in the non-volatile memory 24 is read. Following this, the operation flow proceeds to steps S25 to S30, where similar operations to those at the steps S8 to S14 in the initial turn number determining operations shown in Fig. 6 are performed to calculate an absolute steering angle θ. Thereafter, a timer interruption operation is ended, the operation flow returns to a predetermined main program. Here, at the step S30, when the absolute steering angle θ is calculated, the calculated absolute steering angle θ is stored in an absolute steering angle storage area formed in the RAM 26 to update the data stored therein.

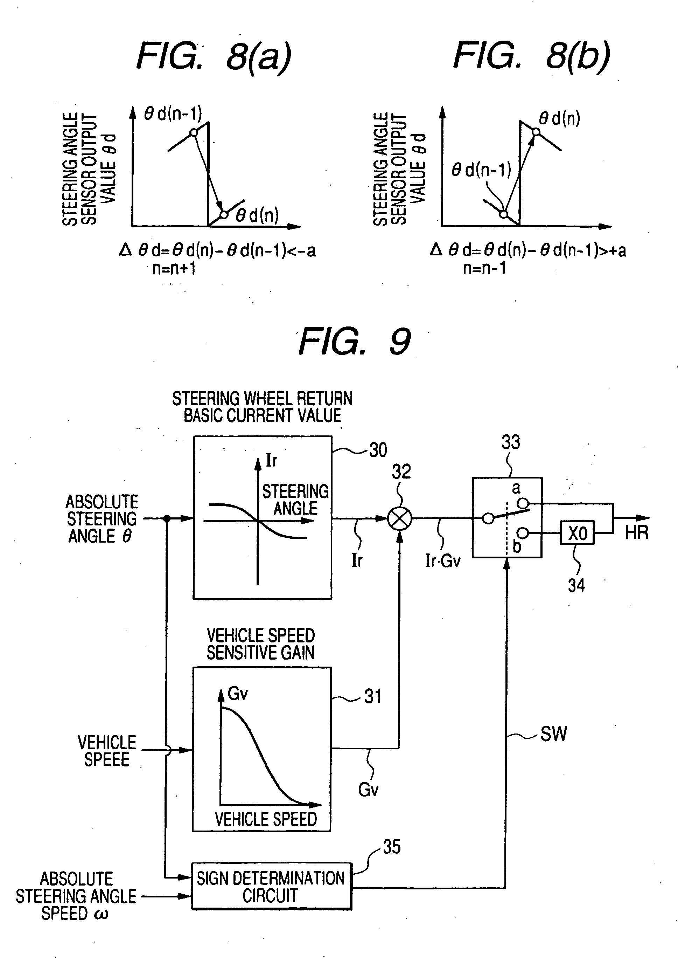

Furthermore, as is shown in Fig. 9, the steering wheel return controller module 28 is made up of

a steering wheel return basic current circuit 30 for outputting a steering wheel return basic current value Ir by a predetermined function based on the absolute steering angle θ,

a gain circuit 31 for outputting a gain Gv corresponding to the vehicle speed Vs by a predetermined function when the vehicle speed Vs is inputted thereinto,

a multiplier 32 for performing a multiplication on the steering wheel return basic current value Ir from the steering wheel return basic current circuit 30 and the gain Gv from the gain circuit 31,

a switch 33 for switching contacts to a contact "a" or "b" for output of an output Ir·Gv from the multiplier 32,

a zero output circuit 34 for making zero an output when the switch 33 is switched to the contact "b", and

a sign determination circuit 35 for determining whether signs of the absolute steering angle θ and the absolute steering speed m match or do not match each other when the absolute steering angle θ and the absolute steering speed ω are inputted thereinto.

The sign determination circuit 35 switches the contacts of the switch 33 by outputting a switch signal SW as a determination signal and switches the contacts to the contact "b" by a switch signal SW which is outputted when the signs of the absolute steering angle θ and the absolute steering speed m match each other. In addition, the contacts "a", "b" of the switch 33 are made to be switched from a circuit (not shown) for detecting that the steering speed ω becomes zero.

Next, the operation of the embodiment that has been described heretofore will be described.

Assuming that the vehicle is at rest with the ignition key switch 12 left in an off state, since no battery voltage Vb is supplied from the battery 11 to the control unit 14 in this state, the control unit 14 is in a stopped state, and the execution of the steering assist control operation which is executed based the steering wheel torque T and the vehicle speed Vs shown in Fig. 3 is in a stopped state, the electric motor 8 being stopped to thereby transmit no steering assist force to the steering shaft 3.

When the ignition switch 12 is put in an on state from the state where the vehicle is at rest, the battery voltage Vb is supplied to the control unit 14, whereby the control unit 14 is activated to operate, and the steering assist controlling operation by the motor current detector module 19, the current command value operation unit 21, the current feedback controller module 22, the motor drive circuit 23, the steering wheel return controller module 28 and the adder 29 which are shown in Fig. 5, the initial absolute steering angle calculating operation shown in Fig. 6 and the absolute steering angle calculating operation shown in Fig. 7 are started to be executed.

Since the vehicle is at rest in this state, the wheel speeds $V_{FL}$ to $V_{RR}$ which are detected from the respective wheel speed sensors 25FL to 25RR are "0", and since the vehicle is determined to be in the stopped state at the step S1 in the initial absolute steering angle calculating operation shown in Fig. 6, the waiting state continues and the initial turn number $n_{int}$ is kept in the non-determined state.

Due to this, since the initial turn number $n_{int}$ is not determined in the absolute steering angle calculating operation shown in Fig. 7, the timer interruption operation is ended without calculating an absolute steering angle θ, and the operation flow returns to the predetermined main program.

Due to this, in the steering wheel return controller module 28, since no absolute steering angle θ is inputted from the absolute steering angle calculation module 26, the steering wheel return control signal HR is set to "0" and the signal so set is supplied to the adder 29, where the current command value Iref based on the steering wheel torque T which was calculated by the current command value calculation module 21 and the vehicle speed detection value Vs is outputted to the current feedback controller module 22 as it is.

As this occurs, since the steering wheel torque T detected by the steering torque sensor 16 is "0" in such a state that the driver is not rotating the steering wheel 2, the current command value Iref which is detected by the current command value calculation module 21 becomes "0", and since the motor current Im which is detected by the motor current detection module 19 is also "0", the motor current Im outputted from the motor drive circuit 23 also becomes "0" whereby the motor 8 continues to stay in the stopped state.

When the driver turns the steering wheel 2 to realize a state in which the steering wheel 2 is turned with the vehicle kept in the stopped state, in response to this, a comparatively large steering wheel torque T is outputted from the steering torque sensor 16, whereby a comparatively large current command value Iref according to the steering wheel torque T and the vehicle speed Vs is outputted from the current command value calculation module 21.

As this occurs, since the electric motor 8 is in the stopped state, the motor current Im which is detected by the motor current detection module 19 remains at "0", whereby a comparatively large voltage command value Vref is outputted from the motor drive circuit 23, and a comparatively large motor drive current Im is outputted to the electric motor 8.

Due to this, the electric motor 8 is driven to rotate, whereby a comparatively large steering assist force is generated, and the generated steering assist force is transmitted to the steering shaft 3, thereby making it possible to turn the steering wheel 2 lightly.

Since.the vehicle still stays in the stopped state in this state, although a steering angle sensor output value $\theta d(n)$ corresponding to the turning angle of the steering wheel 2 is outputted from the steering angle sensor 18, because wheel speeds outputted from the wheel speed sensors 25FL to 25RR still remain at "0", the operation flow continues to stay in the waiting state at the step S0.

When the vehicle is caused to start in this state, wheel speeds $V_{FL}$ to $V_{RR}$ are outputted from the wheel speed sensors 25FL to 25RR. Due to this, at the step S0 in the operation shown in Fig. 6, the wheel speeds $V_{FL}$ to $V_{RR}$ are read, and since the wheel speeds $V_{FL}$ to $V_{RR}$ all exceed "0", judging that the vehicle is running, the operation flow proceeds from the step S1 to the step S2, where a first estimated steering angle $\theta_{estF}$ and a second estimated steering angle $\theta_{estR}$ are calculated based on the wheel speeds $V_{FL}$ to $V_{RR}$.

As this occurs, in the event that the vehicle starts to travel straight ahead, since the wheel speeds VFL and VFR of the left and right front wheels and the wheel speeds VRL and VRR of the left and right rear wheels become equal, the right-hand members of Equations (2) and (3) described above become substantially "0", whereby the first estimated steering angle $\theta_{estF}$ and the second estimated steering angle $\theta_{estR}$ both become substantially "0".

Due to this, since the first estimated steering angle $\theta_{estF}$ and the second estimated steering angle $\theta_{estR}$ take substantially equal values, an estimated steering angle deviation $\Delta\theta_{est}$ therebetween also becomes substantially "0". Hence, the estimated steering angle deviation $\Delta\theta_{est}$ is less than the set value $\Delta\theta s$. Thus, the operation flow proceeds from the step S4 to the step S5, where the steering angle sensor output value $\theta d(n)$ is read from the steering sensor 18 and the neutral point detection value $\theta d0$ is read from the non-volatile memory 24.

Following this, the operation flow proceeds to the step S6, whether or not the count value Cnt is "0" is determined. Here, since the count value Cnt is initialized to "0" in the initial state, the operation flow proceeds to the step S7, where an initial turn number n is estimated based on the first estimated steering angle $\theta_{estF}$ and the steering angle sensor output value $\theta d(n)$. As this occurs, since the vehicle is traveling straight ahead and the first estimated steering angle $\theta_{estF}$ also becomes substantially "0", the initial turn number n is set to "0".

Then, the operation flow proceeds to the step S13, where an absolute steering angle is calculated according to Equation (4) described above. As this occurs, since the turn number n is "0" and the steering angle sensor output value $\theta d$ is substantially equal to the neutral point detection value $\theta d0$, an absolute steering angle $\theta$ that is to be calculated becomes substantially "0".

Due to this, deviations $\Delta\theta_F$ and $\Delta\theta_R$ between the first and second estimated steering angles $\theta_{estF}$, $\theta_{estR}$ and the absolute steering angle $\theta$ also become substantially "0", and since both the deviations $\Delta\theta_F$ and $\Delta\theta_R$ become less than the set value $\Delta\theta_{error}$ which represents the permissible error range, the operation flow proceeds from the step S15 to the step S17, where "1" is added to the count value Cnt to thereby realize Cnt = 1.

Since the count value Cnt has not reached the predetermined value K yet in this state, the operation flow returns to the step S5, where the steering angle sensor outputs value $\theta d$ and the neutral point detection value $\theta d0$ are read again, and following this, the operation flow proceeds to the step S6, however, since the count value Cnt is "1," the operation flow jumps to the step S8 without proceeding to the step S7.

Due to this, an estimation of a new turn number n is not performed, and when the vehicle continues traveling straight ahead, since the steering angle sensor output value $\theta d(n)$ which is outputted from the steering sensor 18 is substantially equal to the immediately preceding steering angle sensor output value $\theta d (n-1)$ and the output variation $\Delta\theta d$ therebetween becomes substantially "0", $\Delta\theta d \geq -A$, and $\Delta\theta d \leq +A$, and therefore, the operation flow proceeds from the step S9 to the S13 via the step S11, where an absolute steering angle $\theta$ is calculated. Since the estimated steering angle deviations $\Delta\theta_F$ and $\Delta\theta_R$ also continues to be substantially "0", the operation flow proceeds from the step S15 to the step S17, where the count value Cnt is incremented by "1".

When this state is repeated until the count value Cnt reaches the predetermined value K, the operation flow proceeds from the step S18 to the step S19, where the turn number n resulting then, that is, n = 0 is determined as the initial turn number $n_{inst}$.

When the initial turn number $n_{inst}$ is determined in this way, the operation flow proceeds to the step 522 to the step S23 in the absolute steering angle calculating operation shown in Fig. 7, where the initial turn number $n_{inst}$ is read, Following this, the operation flow proceeds to the step S24, where the steering angle sensor output value $\theta d(n)$ which is outputted from the steering angle sensor 18 is read and the neutral point detection value $\theta d0$ is read from the non-volatile memory 24. Whereafter similar operations to those performed at the steps 58 to S13 in the initial turn number estimation operation are performed to calculate an absolute steering angle θ. In this case, since the vehicle continues to travel straight ahead, the absolute steering angle θ also becomes substantially "0".

Thereafter, the operation flow proceeds from the step S21 directly to the step S24 in the absolute steering angle calculating operation in Fig. 7, where the steering angle sensor output value θd(n) which is outputted from the steering angle sensor 18 is read and the neutral point detection value θd0 which is stored in the non-volatile memory 24 is read therefrom, whereby whether the turn number n is increased or decreased is determined based on the current steering angle sensor output value θd(n) and the immediately preceding steering angle sensor output value θd(n-1). Namely, for example, when the steering wheel is turned rightwards (or leftwards) to realize a rightward turned or steered state (or a leftward turned or steered state), whereby the steering angle sensor outputs value θd(n) which is detected by the steering angle sensor 18 is increased (or decreased) from the state where it is substantially equal to the neutral point detection value θd0 so as to result in a state where the steering angle sensor output value θd(n) exceeds 180° (or -180°), as is shown in Fig. 8A, the steering angle sensor output value θd(n) changes from a maximum value $\theta d_{MAX}$ to a minimum value $\theta d_{MIN}$ (or as is shown in Fig. 8B, from the minimum value $\theta d_{MIN}$ to the maximum value $\theta d_{MAX}$).

Due to this, the operation flow proceeds from the step S26 to the step S27, where the turn number n is incremented by "1" (or proceeds from the step S26 to the step S29 via the step S28, where the turn number n is decremented by "1"), whereby a new turn number n is set. Due to this, by performing an operation to calculate an absolute steering angle θ at the step S30, the absolute steering angle θ is continuously increased (or decreased) from 180° to, for example, 181° (or from -180° to, for example, -181°), thereby making it possible to calculate an accurate absolute steering angle θ with high resolution and good linearity.

When the state is realized in this way where the absolute steering angle θ can be calculated, although the steering wheel return controller module 28 is activated, since in the state where the vehicle is traveling straight ahead, the absolute steering angle θ is held at 0° and the absolute steering speed ω, which is a differential value thereof, becomes "0", judging that the steering wheel 2 is in a non-turned state, the switch 33 is switched to the contact "b" and the steering wheel return control signal HR is made to be zero. As a result, the current command value Iref calculated by the current command value calculation module 21 is supplied to the current feedback control module 22 as it is

When the steering wheel 2 is turned, for example, leftwards (or rightwards) from the state where the vehicle is traveling straight ahead, the absolute steering angle θ is increased in a negative (or positive) direction, and the absolute steering speed m is directed in a negative (or positive) direction. Therefore, judging that the steering wheel is turned in a direction in which it is turned further in the same direction, the switch signal SW is outputted from the sign determination circuit 35, whereby the state is maintained where the switch 33 is switched to the contact "b". Thereafter, when the steering wheel 2 is turned rightwards (or leftwards) to return to the neutral position, since the absolute steering angle θ becomes negative (or positive) and the absolute steering speed ω becomes positive (or negative), the signs thereof become different from each other, whereby it is judged that a state results where the steering wheel 2 is returned, and the switch 33 of the steering wheel return controller module 28 is switched to the contact "a". Accordingly, the value Ir·Gv which results from the multiplication of the steering wheel return basic current Ir which is outputted from the steering wheel return basic current circuit 30 based on the absolute steering angle θ and the vehicle speed sensitive gain GV which is outputted from the gain circuit 31 by the multiplier 32 is outputted to the adder 29 as the steering wheel return control signal HR. Due to this, a good steering wheel return control can be performed only when the steering wheel is returned.

Thus, while the operation has been described heretofore in such a state that the vehicle is traveling straight ahead, when the vehicle is caused to start with the steering wheel 2 turned leftwards (or rightwards) as when driving the vehicle from a parking place into the road which faces the road at right angles, since the wheel speeds $V_{FR}$ and $V_{RR}$ (or $V_{FL}$ and $V_{RL}$) of the outside wheels become faster than the wheels speeds $V_{FL}$ and $V_{RL}$ (or $V_{FR}$ and $V_{RR}$) of the inside wheels when the vehicle starts to turn leftwards (or rightwards), both the first estimated steering angle $\theta_{estF}$ and the second estimated steering angle $\theta_{estR}$ which are calculated by Equation (2) and Equation (3) described above take negative values (or positive values), whereby values corresponding to the turning or steering angle of the steering wheel 2 result.

Due to this, in the initial turn number determining operation in Fig. 6, when, with the vehicle started to be in a running state, the operation flow proceeds from the step S1 to the step S2 and proceeds further to the step S6 by way of the steps S3 to S5, the count value Cnt is reset to "0", whereby an initial turn number n is estimated based on the first estimated steering angle $\theta_{estF}$, and the operation expressed by Equation (4) above is performed based on the estimated turn number n, the steering angle sensor output value θd(n) and the neutral point detection value θd0 so as to calculate an absolute steering angle θ.

As this occurs, since the first estimated steering angle $\theta_{estF}$ is the steering angle with rough accuracy and is not an accurate value, for example, when the vehicle is caused to start with the steering wheel 2 turned rightwards and, for example, held stationary in that position, the first estimated steering angle $\theta_{estF}$ is, for example, 160°, and although the initial turn number n = 0, the steering angle sensor output value θd (n) which is detected by the steering sensor 18 based on an actual turning or steering angle (which is, for example, in the vicinity of 181° in the right steering angle range A(1) with the turn number n = 1) takes a value which is close to the minimum value $\theta d_{MIN}$, the absolute steering angle $\theta$ which is to be calculated at the step S13 in Fig. 6 becomes a value which is close to -180° which represents the state where the steering wheel 2 is turned leftwards.

Due to this, since both the deviation $\Delta\theta_F$ which is made up of the absolute value of the value which results by subtracting the first estimated steering angle $\theta_{estF}$ from the absolute steering angle $\theta$ which is calculated at the step S14 and the deviation $\Delta\theta_R$ which is made up of the absolute value of the value which results by subtracting the second estimated steering angle $\theta_{estR}$ from the absolute steering angle $\theta$ take large values, the operation flow proceeds to the step S16 after it has been judged at the step S15 that no reliability exists therein, where the count value Cnt is reset to "0", whereafter the operation flow returns to the step S0, where the initial turn number determining operation is restarted.

Thereafter, when the state results where the initial turn number n which is estimated based on the first estimated steering angle $\theta_{estF}$ coincides with the actual turn number to thereby realize the state where the reliability is increased, that is, when the state where the deviation $\Delta\theta_F$ and the deviation $\Delta\theta_R$ between the absolute steering angle $\theta$ which is calculated and the first estimated steering angle $\theta_{estF}$ and the second estimated steering angle $\theta_{estR}$ both become smaller than the set value $\Delta\theta$error which represents the permissible error range continues until the count value Cnt reaches the set value K, the initial turn number $n_{int}$ is determined.

Furthermore, when the vehicle is caused to start on the road surface where the road surface friction coefficient is low as on a snow-covered road surface, a frozen or ice-covered road surface or a wet road surface due to rain, or the vehicle is caused to start abruptly, wheel slippage occurs on the left and right rear wheels which are the drive wheels, and although the first estimated steering angle $\theta_{estF}$ which is calculated based on the wheels speeds $V_{FL}$ and $V_{FR}$ of the front wheels which are the driven wheels becomes a steering angle which follows the turning of the steering wheel 2, the second estimated steering angle $\theta_{estR}$ which is calculated based on the wheels speeds $V_{RL}$ and $V_{RR}$ of the rear wheels becomes a value which differs from the actual steering angle. Due to this, the estimated steering angle deviation $\Delta\theta_{est}$ which is made up of the absolute value of the value which results by subtracting the second estimated steering angle $\theta_{estR}$ from the first estimated steering angle $\theta_{estF}$ at the step S3 in the operation shown in Fig. 6 takes a large value, and since $\Delta\theta_{est} > \Delta\theta s$ results at the step S4, the operation flow returns directly to the step S0, and no determination of the turn number n is performed.

In addition, also when the vehicle is caused to start to travel straight ahead on a so-called split $\mu$ road surface where the friction coefficient differs on the left-hand side and right-hand side of the road surface, the steering wheel 2 is held in the neutral position and a value close to the neutral point detection value $\theta d0$ is detected by the steering angle sensor 18. However, the first estimated steering angle $\theta_{estF}$ and the second estimated steering angle $\theta_{estR}$ become steering angles which represent a turning state due to the wheels slipping on the side of the road surface where the friction coefficient becomes lower, and the turn number n which is estimated based on the estimated steering angles becomes a different value from the actual turn number n. However, also when this is the case, similar to the case described above where the turn number n which is estimated based on the first estimated steering angle $\theta_{estF}$ differs from the actual turn number in such a state that the vehicle is caused to start to turn, the operation flow proceeds from the step S15 to the step S16, where the count value Cnt is reset to "0" and thereafter returns to the step S0, and no determination of the initial turn number $n_{int}$ is performed.

In this way, according to the embodiment, at least the estimated steering angle $\theta_{estF}$ is calculated based on the wheel speeds of the vehicle in the initial steering state where the absolute steering angle $\theta$ cannot be detected, the turn number n is estimated based on the estimated steering angle $\theta_{estF}$, the steering angle $\theta$ is calculated according to Equation (4) based on the estimated turn number n, the steering angle sensor output value $\theta d(n)$ which is detected by the steering angle sensor 18 and the neutral point detection value $\theta d0$ and the reliability of the estimated steering angle $\theta_{estF}$ is judged by comparing the calculated absolute steering angle $\theta$ with the estimated steering angle $\theta_{estF}$. Therefore, the initial turn number $n_{int}$ can be determined accurately, and by performing an operation to calculate the absolute steering angle $\theta$ based on the determined initial turn number $n_{int}$, the accurate absolute steering angle $\theta$ can be obtained with high resolution and good linearity.

Moreover, when determining the initial turn number $n_{int}$, since the deviation $\Delta\theta_{est}$ between the first estimated steering angle $\theta_{estF}$ and the second estimated steering angle $\theta_{estR}$ is calculated after the first estimated steering angle $\theta_{estF}$ and the second estimated steering angle $\theta_{estR}$ which are estimated based on the front and rear wheels, that is, the driven wheels and the driving wheels have been calculated, and the reliability is judged as being low when the deviation $\Delta\theta_{est}$ is larger than the set value $\Delta\theta s$, a determination of the turn number n based on an uncertain estimated steering angle can be prevented in an ensured fashion, thereby making it possible to determine the accurate initial turn number $n_{int}$.

In addition, in the turn number determining operation, since the deviations $\Delta\theta_F$ and $\Delta\theta_R$ between the calculated absolute steering angle $\theta$ and the first estimated steering angle $\theta_{estF}$ and the second estimated steering angle $\theta_{estR}$ are calculated, and it is determined that the reliability is high when both the deviations $\Delta\theta_F$ and $\Delta\theta_R$ are less than the set value $\Delta\theta_{error}$ which represents the permissible error range, a more accurate initial turn number n can be determined. Note that while in the first embodiment, the invention has been described as being applied to the rear-drive vehicle, the invention is not limited thereto. The present invention may be applied to a front-drive vehicle in such a way that a first estimated steering angle is calculated based on wheel speeds of rear wheels which constitute driven wheels, while a second estimated steering angle is calculated based on wheel speeds of front wheels which constitute driving wheels.

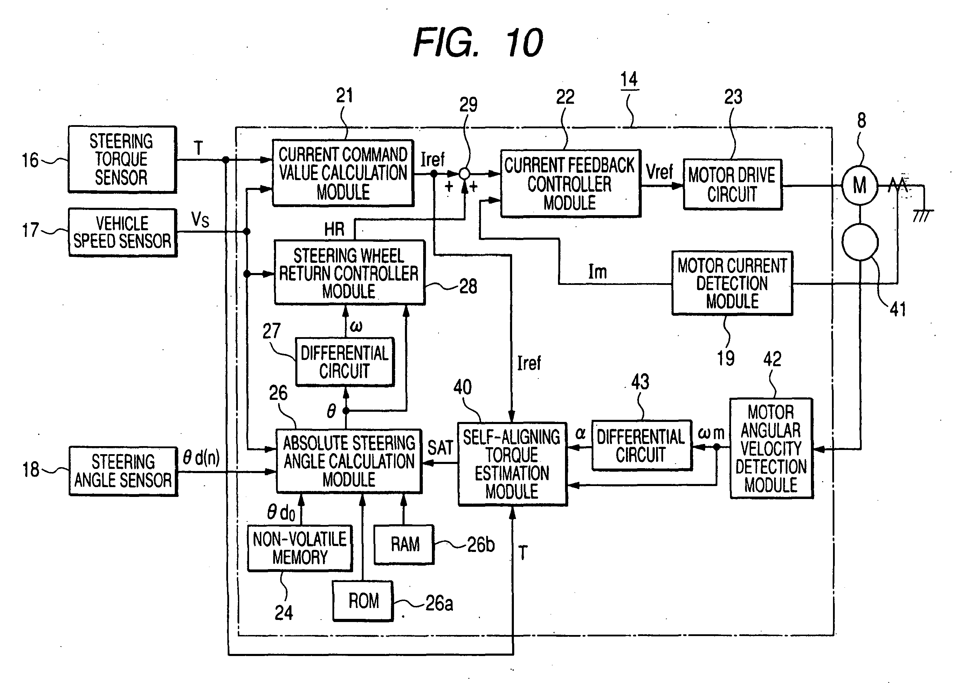

Next, a second embodiment of the invention will be described by reference to Figs. 10 to 14.

This second embodiment is such that an initial steering angle is set based on a self-aligning torque SAT and a vehicle speed Vs in place of the configuration of the first embodiment described above in which the initial absolute steering angle is estimated based on the wheel speeds.

Namely, the second embodiment has a similar configuration to that shown in Fig. 5 except for a configuration in which a self-aligning torque estimation module 40 is provided in a control unit 14 which detects a self-aligning torque SAT which acts on the vehicle and the self-aligning torque SAT detected by this self-aligning torque estimation module 40 and a vehicle speed Vs detected by a vehicle speed sensor 17 are made to be supplied to an absolute steering angle calculation module 26, and hence, like reference numerals will be imparted to like constituent components to those shown in Fig. 5, and the detailed description thereof will be omitted here.

Here, inputted into the self-aligning torque estimation module 40 are a steering wheel torque T which is outputted from a steering torque sensor 16, a motor angular velocity mm which is outputted from a motor angular velocity detection module 42 which detects a motor angular velocity $\omega m$ based on a rotational angle signal which is outputted from an encoder 41 coupled to an output shaft of an electric motor 8, a motor angular acceleration a which is differentiated by a differential circuit 43 and a current command value Iref which is calculated by a current command value calculation module 21, whereby the self-aligning torque estimation module 40 performs an operation to estimate a self-aligning torque SAT base on those inputted thereinto.

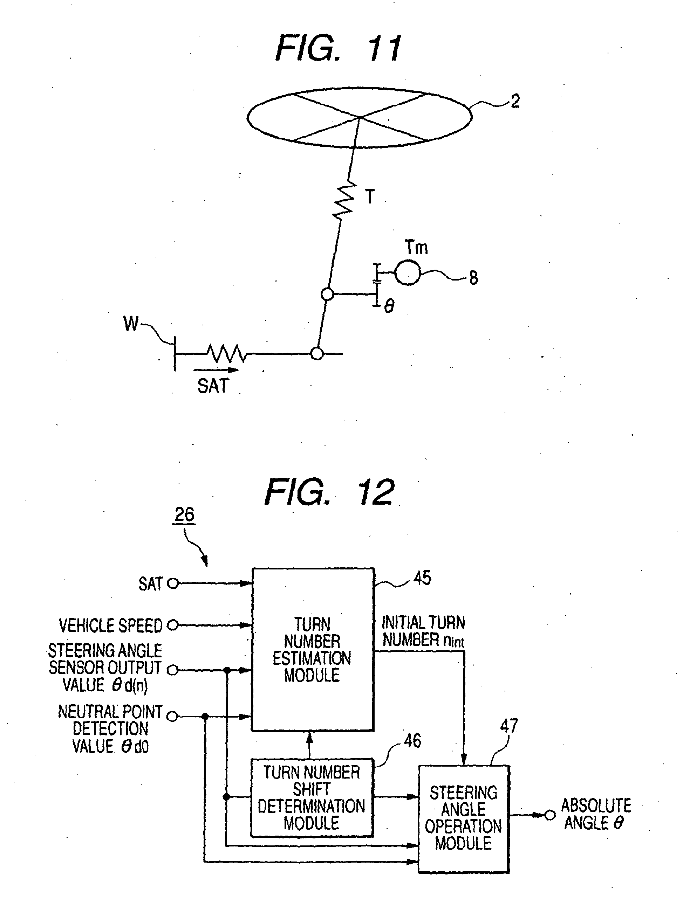

A principle on which this self-aligning torque SAT is calculated will be described by illustrating how torque is generated from the road surface to a steering wheel in Fig. 11. Namely, a steering wheel torque T is generated by the driver operating a steering wheel 2, and an electric motor 8 generates an assist torque Tm according to the generated steering wheel torque T. As a result, wheels are turned, and self-aligning torque SAT is generated as reaction force. In addition, as this occurs, torque which constitutes a resistance to turning or steering of the steering wheel 2 is generated by virtue of inertia J and friction (static friction) of the electric motor 8. When considering a balance of these forces, an equation of motion such as expressed by Equation (5) below will be obtained.

$$J \cdot \alpha + Fr \cdot sign(\omega m) + SAT = Tm + T \quad \ldots \ldots (5)$$

Here, when Equation (5) is subjected to Laplace transform with an initial value as zero and is then solved for self-aligning torque SAT, Equation (6) below will be obtained.

$$SAT(s) = Tm(s) + +T)s) - J \cdot \alpha(s) - Fr \cdot sign(\omega m(s)) \quad \ldots (6)$$

As is seen from Equation (6) above, by obtaining in advance the inertia J and friction (static friction) Fr of the electric motor 8 as constants, self-aligning torque SAT can be estimated from motor angular velocity $\omega m$, motor angular acceleration $\alpha$, assist torque Tm and steering wheel torque T.

Here, since the assist torque Tm is proportional to a current command value Iref, the current command value Iref is used in place of the assist torque Tm.

In addition, as is shown in Fig. 12, the absolute steering angle calculation module 26 includes

a turn number estimation module 45 into which a self-aligning torque SAT, a vehicle speed Vs, a steering angle sensor output value $\theta d(n)$ and a neutral point detection value $\theta d0$ are inputted,

a turn number shift determination module 46 for determining a turn number shift based on the steering angle sensor output value $\theta d(n)$, and

a steering angle operation module 47 which calculates an absolute steering angle $\theta$ based on an initial turn number $n_{int}$ estimated by the turn number estimation module 45, the turn number n determined by the turn number shift determination module 46, the steering angle sensor output value $\theta d(n)$ and the neutral point detection value $\theta d0$, and

an absolute steering angle $\theta$ is outputted from the steering angle operation module 47.

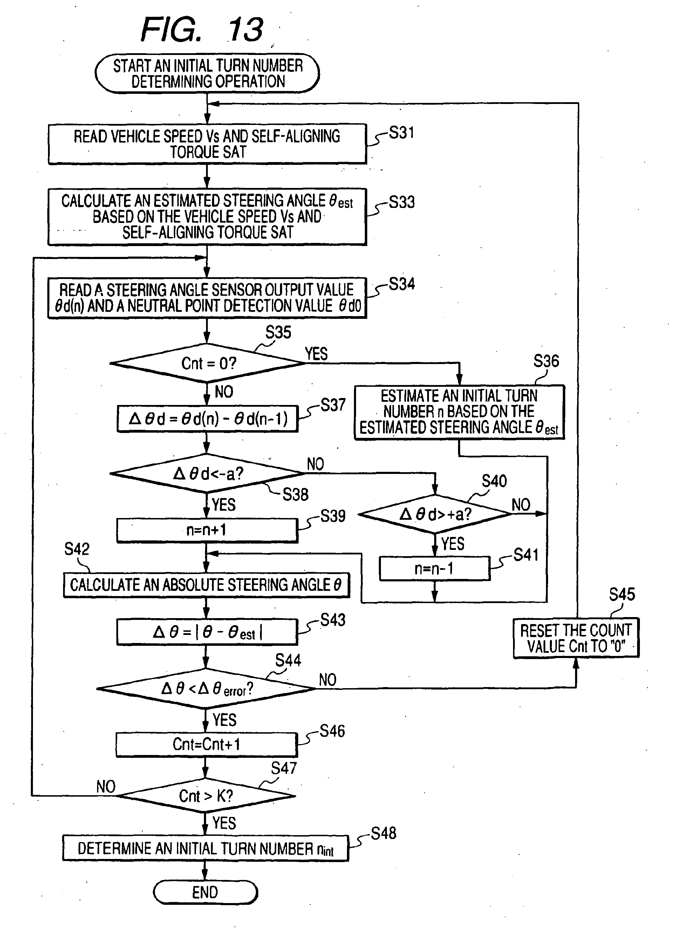

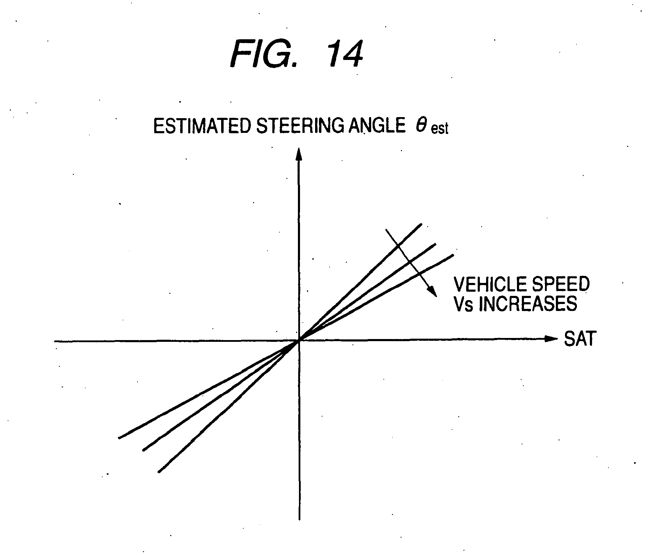

Here, in the turn number estimation module 45, an initial turn number determining operation shown in Fig. 13 is executed. In this initial turn number determining operation, firstly, at step S31, a vehicle speed Vs and a self-aligning torque SAT are read, and following this, the operation flow proceeds to step S33, where an estimated steering angle $\theta_{est}$ is calculated by referring to a steering angle calculation map shown in Fig. 14 based on the vehicle speed Vs and the self-aligning torque SAT.

Here, in the steering angle calculation map shown in Fig.14, the self-aligning torque is represented by an axis of abscissas, while the estimated steering angle $\theta_{est}$ is represented by an axis of ordinates, and the steering angle calculation map is made up of a characteristic diagram with the vehicle speed Vs used as a parameter, in which a required number of characteristic lines are set whose inclinations sequentially decrease as the vehicle speed Vs increases.

Next, the operation flow proceeds to step S34, where a steering angle sensor output value θd(n) which is detected by a steering angle sensor 18 is read, and a neutral point detection value θd0 stored in a non-volatile memory 24 is read. Following this, the operation flow proceeds to step S35, where whether or not a count value Cnt is reset to "0", and if Cnt > 0, the operation flow jumps directly to step S37, whereas if Cnt = 0, the operation flow proceeds to step S36. When Cnt > 0, operations at steps S37 to S41, which are similar to the operations at the steps S8 to S12 shown in Fig. 6, are performed before a turn number is set, and the operation flow then proceeds to step S42. Further, when Cnt=0, an operation similar to the above described step S7 of Fig. 6 is performed and the initial turn number n is estimated based on the estimated steering angle $\theta_{est}$ and then the operation flow proceeds to the step S42. At this step S42, an operation similar to the operation at the step S13 in the initial turn number determining operation shown in Fig. 6 is executed to calculate an absolute steering angle θ. Then, the operation flow proceeds to step S43, where a steering angle deviation Δθ is calculated which is made up of an absolute value of a value resulting by subtracting the estimated steering angle $\theta_{est}$ from the calculated absolute steering angle θ, the operation flow then proceeding to step S44.

At this step S44, whether or not the steering angle deviation Δθ is less than a set value $\Delta\theta_{error}$ which constitutes a permissible error range which is set in advance is determined, and if $\Delta\theta \geq \Delta\theta_{error}$, the operation flow proceeds to step S45, where the count value Cnt is reset to "0", whereafter the operation flow returns to the step S31. If $\Delta\theta < \Delta\theta_{error}$, the operation flow proceeds to step S46, where as done at the step S16 in the operation shown in Fig. 6, the count value Cnt is incremented. Whereafter the operation flow proceeds to step S47, where whether or not the count value Cnt has reached a set value K is determined, and if Cnt ≤ K, the operation flow returns to the step S34, whereas if Cnt > K, the operation flow proceeds to step S48, where the turn number n is determined as an initial turn number n, and then, the initial turn number determining operation is ended.

In the initial turn number determining operation shown in Fig. 13, the operations performed at the steps S37 to S41 correspond to the turn number shift determination module 46, and the operations performed at the steps S31 to S36 and the operations performed at the steps S42 to S48 correspond to the turn number estimation module 45.

Next, the operation of the second embodiment will be described.

When the vehicle is now caused to start from a standstill, a self-aligning torque SAT detected by the self-aligning torque estimation module 40 becomes substantially "0", in the event that the vehicle is traveling straight ahead, and in response to this, an estimated steering angle θest which is calculated by the turn number estimation module 45 at the step S33 in the initial turn number determining operation also becomes substantially "0", a turn number n which is calculated at the step S36 also becoming substantially "0".

Next, the operation flow proceeds to the step S42, and since the steering angle output value θd(n) which is detected by the steering angle sensor 18 becomes substantially equal to the neutral point detection value θd0, the absolute steering angle θ which is calculated by Equation (4) above also becomes substantially "0".

In addition, since the absolute steering angle θ substantially coincides with the estimated steering angle $\theta_{est}$, the steering angle deviation Δθ becomes substantially "0", and the operation flow proceeds from the step S44 to the step S46, where the count value Cnt is incremented.

Since thereafter, the vehicle continues to travel straight ahead and no change has been made to the immediately preceding steering angle sensor output value θd(n-1), the operation flow proceeds from the step S37 by way of the steps S38 to S42, to thereby calculate an absolute steering angle θ. When the count value Cnt reaches the set value K as a result of repeating the operations, the operation flow proceeds from the step S47 to the step S48, where the initial turn number $n_{int}$ is determined. In the absolute steering angle calculating operation shown in Fig. 7 which is executed in the steering angle operation module 47, an absolute steering angle θ is calculated as done in the first embodiment, and the steering return control is performed in the steering wheel return controller module 28 based on the absolute steering angle θ.

On the other hand, when the vehicle is caused to start to turn, since the self-aligning torque SAT detected by the self-aligning torque estimation module 40 increases as the turning or steering angle of the steering wheel 2 increases and the self-aligning torque SAT increases as the vehicle speed Vs increases, a self-aligning torque SAT which corresponds to the steering angle of the steering wheel 2 and the vehicle speed Vs when the vehicle is turning is detected by the self-aligning torque estimation module 40.

Due to this, in the initial turn number determining operation shown in Fig. 13, the estimated steering angle $\theta_{est}$ is calculated at the step S33 which corresponds to the self-aligning torque SAT and the vehicle speed Vs, whereby a turn number n is estimated based on the estimated steering angle $\theta_{est}$, and as the first embodiment, when a state in which the deviation Δθ which is made up of the absolute value of the value which results by subtracting the estimated steering angle $\theta_{est}$ from the absolute steering angle θ is less than the set value $\Delta\theta_{error}$ which represents the permissible error range continues, the initial turn number $n_{int}$ is determined. In response to this, a calculation of an absolute steering angle θ is performed in the absolute steering angle calculating operation, and the steering wheel return control at the steering wheel return control modulation 28 is started.

Note that while in the second embodiment, the case where the self-aligning torque SAT is estimated is described, the invention is not limited thereto. An actual self-aligning torque SAT may be made to be measured or a torque acting on an intermediate shaft may be made to be detected.

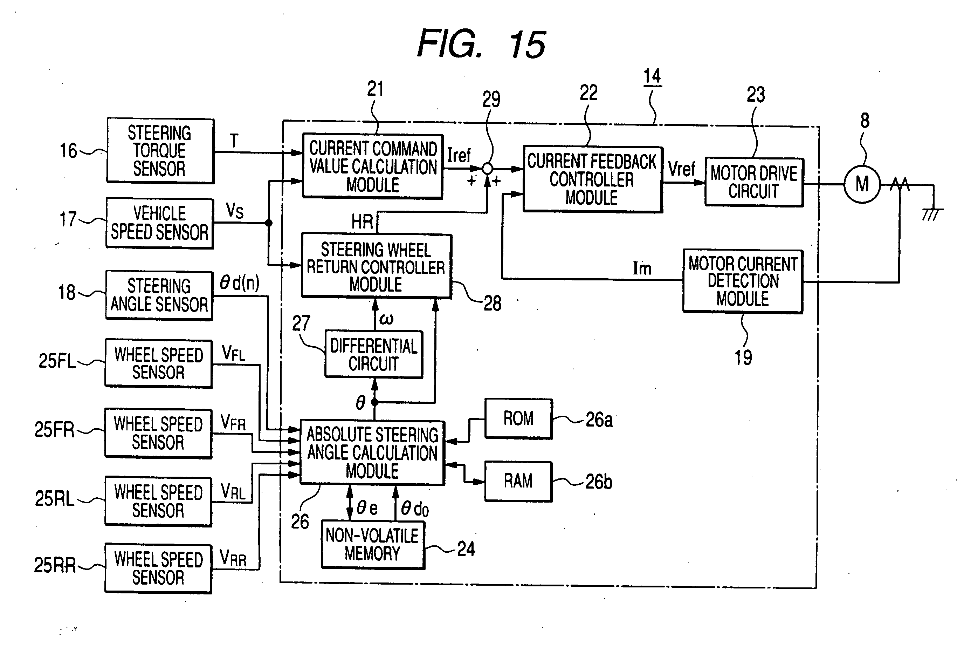

Nest, a third embodiment of the invention will be described by reference to Figs. 15 to 17.

This third embodiment is such that in the initial turn number determining operation in the first embodiment, the determination of the initial turn number is made to be implemented faster than in the first embodiment by utilizing the final absolute steering angle resulting when the immediately preceding driving was completed.

Namely, as is shown in Fig. 15, the third embodiment has a similar configuration to that shown in Fig. 5 except for a configuration in which the final absolute steering angle θe in the immediately preceding driving is made to be stored in a non-volatile memory 24. The final absolute steering angle θe is read when an ignition switch is put in an on state by an absolute steering angle calculation module 26, so as to execute the initial turn number determining operation.

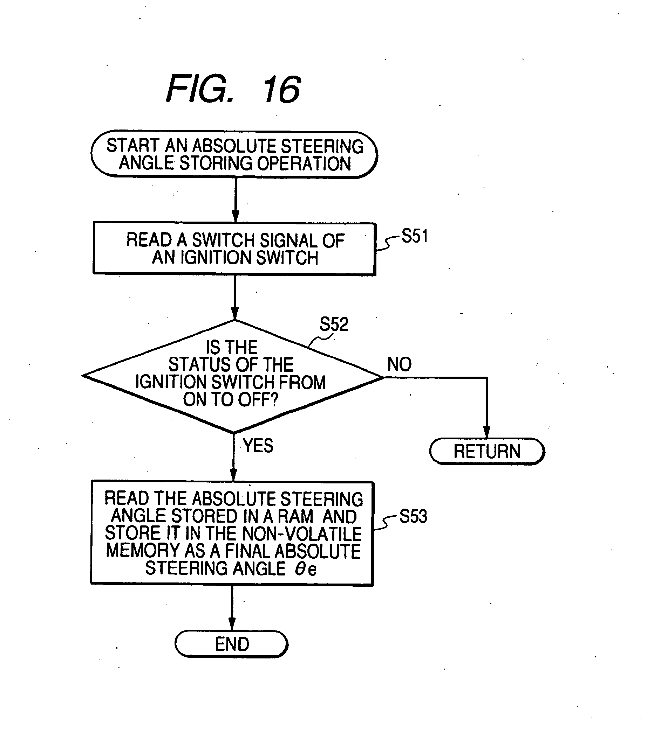

Then, an absolute steering angle storing operation shown in Fig. 16 is executed by the absolute steering angle calculation module 26.

This absolute steering storing operation is executed as a timer interruption operation which is carried out every a predetermined period of time (for example, 20 msec). As is shown in Fig. 16, firstly, at step 551, a switch signal of an ignition switch 12 is read. Then, the operation flow proceeds to step S52, where whether or not there has occurred a state shift in the ignition switch 12 from an on state to an off state, and if the ignition switch 12 continues to be in the on state, the timer interruption operation is ended there, and the operation flow returns to a predetermined main program. If the state shift from the on state to the off state has occurred in the ignition switch 12, the operation flow proceeds to step S53, where the absolute steering angle θ stored in a RAM 26b is read, so that the absolute steering angle θ is stored in a final absolute steering angle storage area formed in the non-volatile memory 24 as a final absolute angle θe so as to update the final absolute steering angle storage area, whereafter the timer interruption operation is ended.

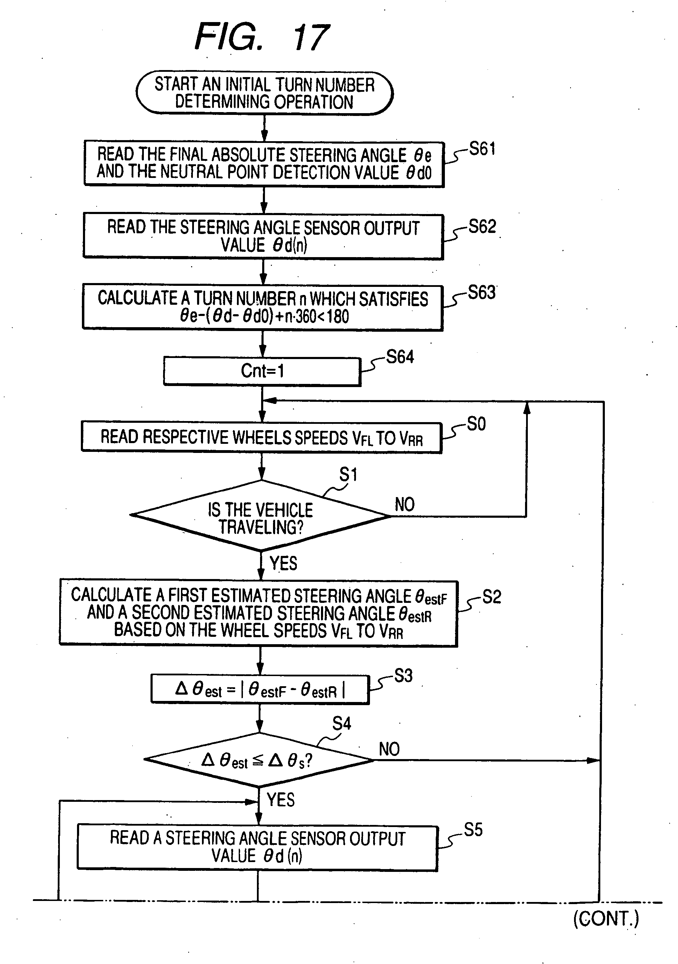

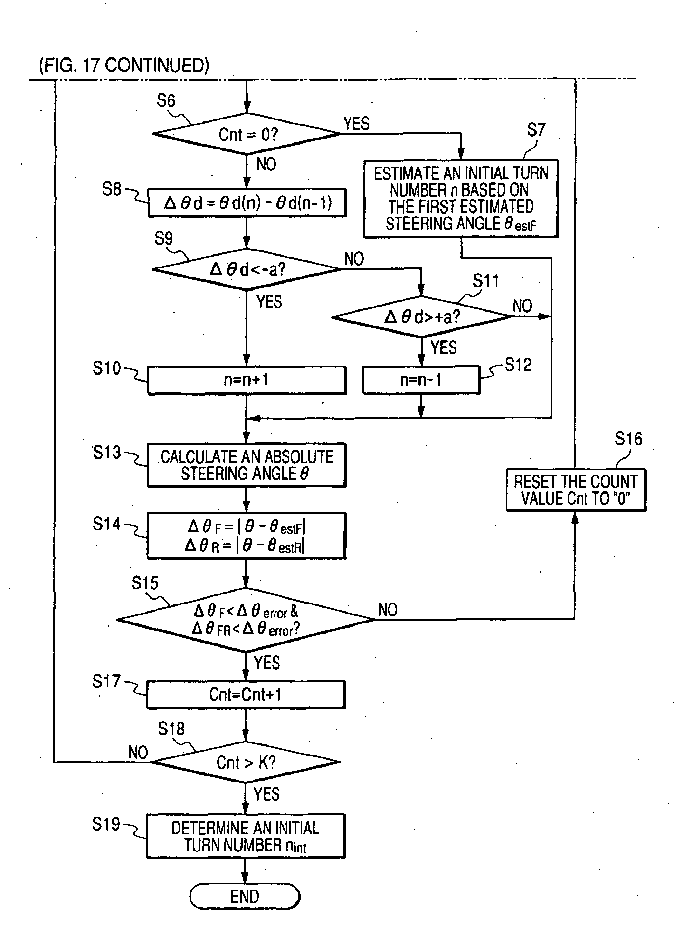

In addition, the initial turn number determining operation executed by the absolute steering angle calculation module 26 is changed as is shown in Fig. 17.

In this initial turn number determining operation, as is shown in Fig. 17, firstly, at step S61, the final absolute steering angle θe in the immediately preceding driving which is stored in the non-volatile memory 24 and a neutral point detection value θd0 are read. Then, the operation flow proceeds to step S62, the steering angle sensor output value θd which is detected by a steering angle sensor 18 is read. Then, the operation flow proceeds to step S63, where a turn number n is calculated which satisfies a condition defined by Equation (7) below, whereafter the operation flow proceeds to step S64, where a count number Cnt is set to "1". Thereafter, the operation flow proceeds to the step S0, so as to perform similar operations to those of the first embodiment shown in Fig. 6 except that the operation at the step S5 is changed so as to read only the steering angle sensor output value θd which is detected by the steering angle sensor 18, and furthermore, the value of the set value $\Delta\theta_{error}$ in the operation at the step S15 is set to a larger value than those in the first and second embodiments. Like step numbers will be given to like operations to those shown in Fig. 6, and the detailed description thereof will be omitted here.

$$\theta e - (\theta d - \theta d0) + n \times 360 < 180 \quad . \quad . \quad . \quad (7)$$

According to the third embodiment, in the state where the ignition switch 12 of the vehicle is in the on state, in the absolute steering angle storing operation shown in Fig. 16, only the switch signal of the ignition switch 12 is read, and the timer interruption operation is ended. However, when the ignition switch 12 is shifted from the on state to the off state while the vehicle is at rest, in the absolute steering angle storing operation, the operation flow proceeds from the step S52 to the step S53. In the step S53, the absolute steering angle θ is read which is stored in the absolute steering angle storage area formed in the RAM 26 provided in the absolute angle operation module 26, and then the absolute steering angle θ is then stored in the final absolute steering angle storage area formed in the non-volatile memory 24 as the final absolute steering angle θe so as to update the final absolute steering angle storage area.

Due to this, when the ignition switch 12 is put in the on state to use drive vehicle thereafter, the initial turn number determining operation shown in Fig. 17 is started to be executed.

In this initial turn number determining operation, firstly, the final absolute steering angle θe in the immediately preceding driving stored in the final absolute steering angle storage area of the non-volatile memory 24 and the neutral point detection value θd0 are read (the step S61). Then, the steering angle sensor output value θd(n) which is detected by the steering angle sensor 18 is read (the step S62), whereby the turn number n which satisfies the condition defined by Equation (7) below is calculated based on the final absolute steering angle $\theta e$, the neutral point detection value $\theta d0$ and the steering angle sensor output value $\theta d(n)$, and then the count value Cnt is set to "1".

Due to this, for example, when the vehicle is parked temporarily on the side of the road and.then.is pulled into the road to start driving. The steering angle sensor output value $\theta d(n)$ that is detected by the steering angle sensor 18 when the ignition switch 12 is put in the on state this time with the final absolute steering angle $\theta e$ staying in the neutral position when the vehicle was stopped in the immediately preceding driving or $\theta = \theta d0$ is also $\theta d0$. In the event that the steering wheel has not been turned during the period of time, since $\theta e = \theta d(n) = \theta d0$, when the relevant terms in Equation (7) are substituted by them, it results in $360 \times n < 180$, whereby "0" is calculated as the turn number n.

When the vehicle is caused to start in this state with the steering wheel 2 held stationary in the neutral position, since wheel speeds $V_{FL}$, $V_{RL}$ and $V_{FR}$, $V_{RR}$ of the front and rear left and right wheels become substantially equal, a first estimated steering angle $\theta_{estF}$ based on the wheel speeds of the front wheels and a second estimated steering angle $\theta_{estR}$ based on the wheel speeds of the rear wheels both become substantially "0°."
Due to this, the operation flow proceeds to the step S5 by way of the steps S0 to S4, where the steering angle sensor output value $\theta d(n)$ is read, and since the count value Cnt is set to "1" at the step S54, the operation flow proceeds from step S6 to step S8, where an output variation $\Delta\theta d$ is substantially "0". Then, the operation flow proceeds to step S13 by way of steps S9 and S11, where an absolute steering angle $\theta$ is calculated according to Equation (4) above. As this occurs, since the steering angle sensor output value $\theta d(n)$ is equal to the neutral detection value $\theta d0$ and the turn number n is "0", the absolute steering angle $\theta$ becomes $\theta d0$. since it is also substantially equal to the first estimated steering angle $\theta_{estF}$ and the second estimated steering angle $\theta_{estR}$, the first steering angle deviation $\Delta\theta_F$ and the second $\Delta\theta_R$ also become substantially "0".

Due to this, since $\Delta\theta_F < \theta_{error}$ and $\Delta\theta_R < \theta_{error}$ at the step S15, the operation flow proceeds to step S17, where the count value Cnt is incremented. Thereafter, when the vehicle continues to travel straight ahead and the count value Cnt reaches the predetermined value K, the operation flow proceeds to step S19, where the turn number n = 0 is determined as the initial turn number $n_{int}$.
Due to this, since the count value Cnt is reset to "0" in no case, the initial turn number $n_{int}$ is determined on the spot.

Similarly, also when the vehicle is caused to start from a state in which the vehicle is at rest with the steering wheel 2 held stationary in the neutral position by turning the steering wheel 2 within 180°, similarly to what has been described above, the turn number n is determined as "0".
On the other hand, when the vehicle is parked in a garage while steered rightwards and is then caused to start while steered leftwards, normally, the vehicle is parked with the steering wheel 2 staying in the neutral position when it is completely pulled into the garage, and when the ignition switch 12 is put in the off state in this parked state, $\theta d0$ which represents the neutral position is stored as the final absolute steering angle $\theta e$.

Thereafter, when the vehicle is caused to start after the ignition switch 12 has been put in the on state and the steering wheel has been turned leftwards -180° or more with the vehicle staying at rest, although the final absolute steering angle $\theta e$ is $\theta d0$, the steering angle sensor outputs value $\theta d(n)$ when the vehicle is caused to start is, for example, -210°, and when the relevant terms in Equation (7) above are substituted by them; it results in $\theta d0 - (-210 - \theta d0) + n \times 360 < 180$, and the turn number which satisfies $210 + n \times 360 < 180$ becomes -1.

As this occurs, since the vehicle is caused to start to travel while steered leftwards, assuming that wheels speeds $V_{FR}$, $V_{RR}$ on the right front and rear wheels become faster than wheel speeds $V_{FL}$, $V_{RL}$ of the left front and rear wheels and the first estimated steering angle $\theta_{estF}$ and the second estimated steering angle $\theta_{estR}$ also become -200° which indicates that the vehicle is steered leftwards, although the steering angle deviations $\Delta\theta_F$ and $\Delta\theta_R$ take comparatively large values. Since the reliability of the final absolute steering angle $\theta e$ is high and the value $\Delta\theta_{error}$ is set to the large value, as has been described before, the initial turn number n can be defined on the spot.

In this way, when the final absolute steering angle $\theta e$ is a value in the vicinity of the neutral point detection value $\theta d0$, even though the vehicle is caused to start after the steering wheel 2 has been turned leftwards or rightwards with the vehicle staying at rest or the vehicle is caused to start while the steering wheel 2 is being turned leftwards or rightwards, the initial turn value $n_{int}$ can be determined on the spot.
Similarly, for example, also when the vehicle is stopped with the final absolute steering angle $\theta e$ in the rightward steered (or leftward steered) state, the ignition switch 12 is switched off and the vehicle is then caused to start from the rest with the steering wheel 2 turned or steered $(180 - \theta e)$ or more. Although the turn number n which is calculated based on the final absolute steering angle $\theta e$ becomes a value which differs from an actual turn number n, in this case, too, since the result of the determination at the step S15 indicates that at least either $\Delta\theta_F$ or $\Delta\theta_R$ becomes equal to or more than the set value $\Delta\theta_{error}$ and the count value Cnt is reset to "0", the initial turn n will be estimated based on the first estimated steering angle $\theta_{estF}$ from the next time, thereby making it possible to estimate an accurate turn number.

In this way, according to the third embodiment, since the initial turn number n is set by utilizing the comparatively highly reliable final absolute steering angle $\theta e$ resulting when the immediately preceding driving was completed, comparing with the first embodiment in which the initial turn number n is set from the estimated values based on the wheel speeds, the absolute steering value $\theta$ can be set in lower vehicle speed regions and more quickly.

In addition, since the continuation of the calculating operation of absolute steering angle even after the ignition switch 12 has been put in the off state for estimation of an accurate absolute steering angle is no more necessary, the extra holding power spent for the continuation of the absolute steering angle calculating operation does not have to be spent wastefully any more, and the turn number n is determined after comparison of the final absolute steering angle in the immediately preceding drivingwith the first estimated steering angle based on the wheel speeds, even when the steering wheel 2 is turned 180 degrees or more while the ignition switch 12 is in the off state. Therefore, the turn number which is calculated from the final absolute steering angle in the immediately preceding driving comes to differ from the actual turn number, the erroneous use of the resulting turn number can be avoided in an ensured fashion, thereby making it possible to calculate an accurate absolute steering angle.

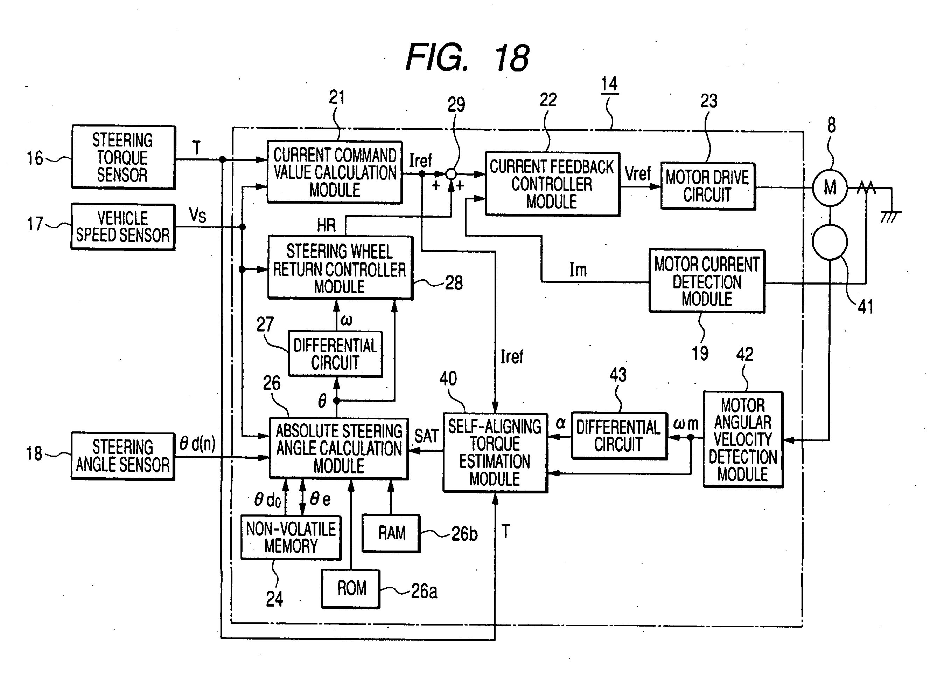

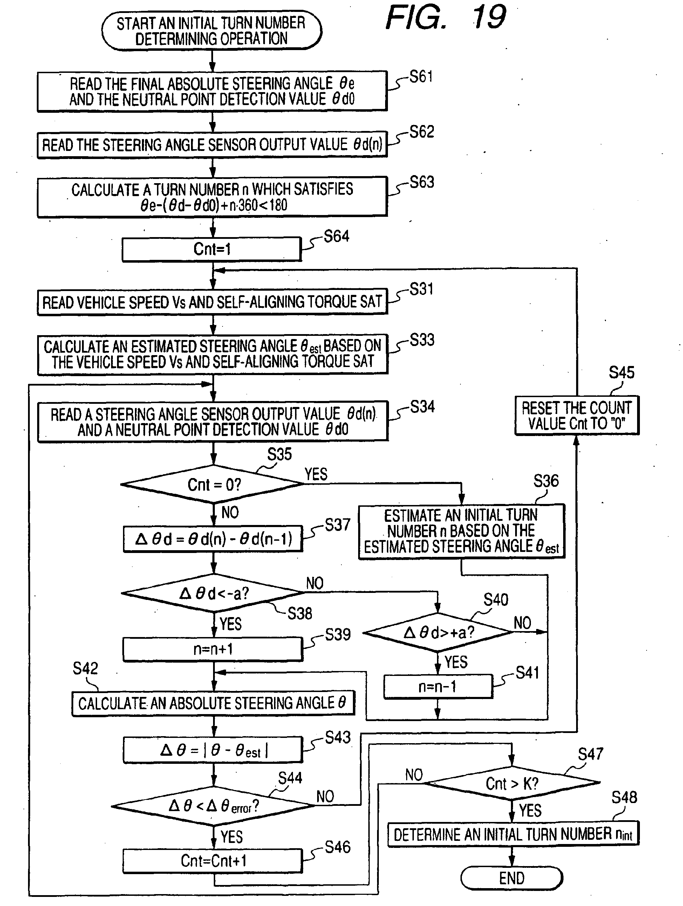

Next, a fourth embodiment of the invention will be described based on Figs. 18 and 19.

This fourth embodiment is such that in the initial turn number determining operation in the second embodiment, the determination of the initial turn number is made to be implemented faster than in the second embodiment by utilizing the final absolute steering angle resulting when the immediately preceding driving was completed.

Namely, as is shown in Fig. 18, the fourth embodiment has a similar configuration to that shown in Fig. 10 except for a configuration in which the final absolute steering angle θe in the immediately preceding driving is made to be stored in a non-volatile memory 24, and the final absolute steering angle θe is read when an ignition switch is put in an on state by an absolute steering angle calculation module 26, so as to execute the initial turn number determining operation.

Then, the absolute steering angle storing operation of the third embodiment shown in Fig. 16 is executed by the absolute steering angle calculation module 26, and the initial turn number determining operation is changed as is shown in Fig. 19.

In this initial turn number determining operation, as is shown in Fig. 19, firstly, at step S61, the final absolute steering angle θe in the immediately preceding driving which is stored in the non-volatile memory 24 and a neutral point detection value θd0 are read. Then, the operation flow proceeds to step S62, the steering angle sensor output value θd which is detected by a steering angle sensor 18 is read. Then, the operation flow proceeds to step S63, where a turn number n is calculated which satisfies the condition defined by Equation (7) above, whereafter the operation flow proceeds to step S64, where a count number Cnt is set to "1". Thereafter, the operation flow proceeds to the step S31, so as to perform similar operations to those of the second embodiment shown in Fig. 13 except that the operation at the step S34 is changed so as to read only the steering angle sensor output value θd which is detected by the steering angle sensor 18, and furthermore, the value of the set value $\Delta\theta_{error}$ in the operation at step S44 is set to a larger value than those in the first and second embodiments. Like step numbers will be given to like operations to those shown in Fig. 13, and the detailed description thereof will be omitted here.

Also in this fourth embodiment, as with the third embodiment, since the final absolute steering angle θe in the immediately preceding driving is stored in the non-volatile memory, and when the ignition switch 12 is shifted from the off state to the on state, the final absolute steering angle θe and the neutral detection value θd0 are read from the non-volatile memory 24 and the steering angle sensor output value θd(n) which is detected by the steering angle sensor 18 is read, whereby the turn number n which satisfies the condition defined by Equation (7) is calculated based on the final absolute steering angle θe, the neutral point detection value θd0 and the steering angle sensor output value θd(n), a similar function and advantage to those provided by the third embodiment can be obtained to the second embodiment.

In addition, while in the first to fourth embodiments, the steering angle sensor 18 is described as being made up of, as is shown in Fig. 2, the magnetized portions 18d and 18e which are provided on the sensor wheel 18c, the magnetism detector 18g having the GMR elements and provided on the fixed portion and the steering angle calculation unit 18h, the invention is not limited thereto. The magnetized portions 18d and 18e may be provided on .the fixed.portion, while the magnetism detector 18g may be provided on the sensor wheel 18c.

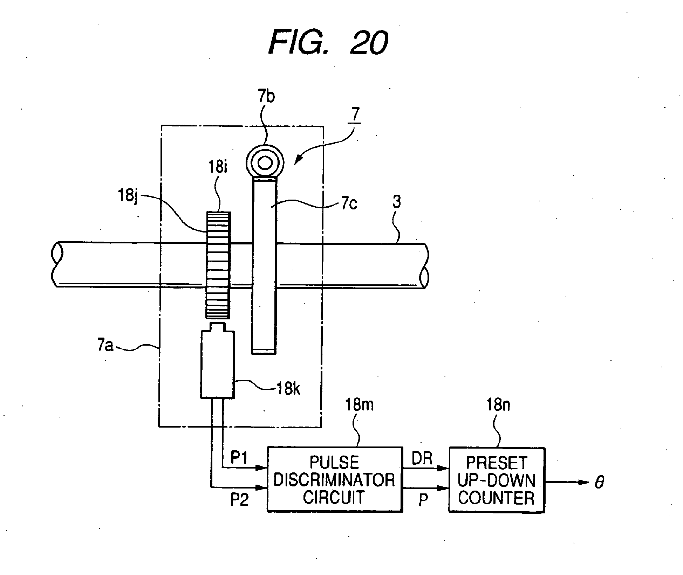

In addition, in place of the spur gear 18a provided on the steering shaft 3 and the toothed portion 18b of the sensor wheel 18c, gears of any types can be used which include bevel gears and helical gears. In addition to this, a toothed pulley and an endless chain can be used as well to make up the relevant components . In short, any mechanism may be used, provided that it can transmit the rotation of the steering shaft 3 to the wheel sensor 18c in a ratio of 1:1. Furthermore, as is shown in Fig. 20, the steering angle sensor 18 may be made up of

a sensor wheel 18j which is provided in parallel with the worm wheel 7c and in which a toothed portion 18i of a predetermined number of teeth which is set according to resolution is formed on an outer circumferential surface thereof and

a magnetism detector 18k which is fixed to the gear housing 7a in such a manner as to face the toothed portion 18i of the sensor wheel 18j,

whereby the magnetism detector 18k is made to output two pulse signals P1 and P2 whose phases are shifted 90 degrees from each other every time the toothed portion 18i of the sensor wheel 18j approaches it, the pulse signals P1 and P2 are made to be supplied to a pulse discriminator circuit 18m so as to form a rotational direction signal DR and a pulse signal P. The rotational direction signal DR and the pulse signal P are made to be supplied to an up-down counter 18n as an up/down signal and a count signal, so as to output a steering angle sensor output value θd(n) which represents one period from 0° to 360° through one rotation of the steering wheel 2, and as the steering sensor, sensors of arbitrary configurations can be used.

Furthermore, while in the first to fourth embodiments, the absolute steering angle θ detected by the absolute steering angle calculation module 26 is described as being used in the steering wheel return controller module 28, the invention is not limited thereto. The absolute steering angle θ may be transmitted to another control unit which requires the absolute steering angle θ by employing a network such as a CAN (Controller Area Network).

In addition, while in the first to fourth embodiments, the turn number n is described as being shifted when the variation in steering angle sensor output value θd(n) is large, the invention is not limited thereto. The steering angle range, that is, the turn number n may be made to be changed when a steering speed that is obtained by differentiating the steering angle sensor output value θd(n) is larger than a predetermined threshold value.

**Claims**

1. An absolute steering angle detecting device for detecting an absolute steering angle of a steering control device of a vehicle, comprising:

   a steering angle detection unit (18) which detects a sensor-steering-angle based on a single rotation of the steering control device (2) being used as a single period;
   a neutral point storage unit (24) which stores a neutral point position detected by the steering angle detection unit (18) at a steering angle neutral point of the steering angle;
   a steering angle range estimation unit which estimates a steering angle range to which the current steering angle belongs, wherein the steering angle range is made up of:

   a neutral steering angle range corresponding to one period which includes the neutral position stored in the neutral point storage unit (24); and
   a plurality of left and right steering angle ranges which are formed on both sides of the neutral steering angle range; and
   an absolute steering angle calculation unit (26) which calculates an absolute steering angle based on the estimated steering angle range, the detected sensor-steering-angle and the stored neutral point position.

2. The absolute steering angle detecting device as set forth in claim 1, wherein the neutral point storage unit is made up of a nonvolatile memory (24).

3. The absolute steering angle detecting device as set forth in claim 1, wherein the steering angle range estimation unit comprises a steering angle range shift controller module which changes the steering angle ranges when a variation in the detected sensor-steering-angle is equal to or larger than a predetermined threshold value.

4. The absolute steering angle detecting device as set forth in claim 1, wherein
   the steering angle range estimation unit comprises a steering angle range shift controller module which
   calculates a variation in output from the steering angle detection unit (18) and changes the steering angle ranges when the calculated variation is equal to or larger than a predetermined threshold value.

5. The absolute steering angle detecting device as set forth in claim 1, wherein there is provided a wheel speed detection unit (25FL,25FR,25RL,25RR) which detects wheel speeds of the vehicle,
   wherein the steering angle range estimation unit comprises a steering angle estimation module which roughly estimates an absolute steering angle based on wheel speeds detected by the wheel speed detection unit (25FL, 25FR, 25RL,25RR), and
   the steering angle range estimation unit estimates the steering angle range to which the current steering angle belongs based on the roughly estimated steering angle.

6. The absolute steering angle detecting device as set forth in claim 5, wherein the steering angle estimation unit comprises:

   a first steering angle estimation module which calculates a first estimated steering angle based on wheel speeds of left and right driven wheels,
   a second steering angle estimation module which calculates a second estimated steering angle based on wheels speeds of left and right driving wheels, and
   invention, there is provided the absolute steering angle detecting device as set forth in the first aspect of the invention, wherein
there is provided:

a wheel speed detection unit which detects wheel speeds of the vehicle; and
a final steering angle storage module which stores a final absolute steering angle in an immediately preceding driving,
wherein the steering angle range estimation unit includes:
a primary steering angle estimation module which roughly estimates a primary absolute steering angle based on the wheel speeds;
a temporary steering angle range calculation module which calculates a temporary steering angle range based on the stored final absolute steering angle, the detected sensor-steering-angle and the stored neutral point position;
and
a secondary absolute steering angle estimation module which estimates a secondary absolute steering angle based on the temporary steering angle range, the detected sensor-steering-angle and the stored neutral point position,
wherein the steering angle range estimation unit outputs the temporary steering angle range as a final value when a
an estimated steering angle determination module which determines the first estimated steering angle as an estimated steering angle when a deviation between the calculated first and second steering angles is less than a predetermined value.

7. The absolute steering angle detecting device as set forth in claim 5, wherein the steering angle estimation unit comprises:

a vehicle speed detection module (17) which detects the vehicle speed (Vs) of the vehicle; and
a self-aligning torque estimation module (40) which detects a self-aligning torque (SAT) of the vehicle,
wherein an estimated steering angle is estimated based on the detected vehicle speed (Vs) and the detected self-aligning torque (SAT).

8. The absolute steering angle detecting device as set forth in claim 7, wherein
the steering angle estimation unit calculates an estimated steering angle by referring to an estimated steering angle calculation map which uses the self aligning torque (SAT) and the vehicle speed (Vs) as parameters.

9. The absolute steering angle detecting device as set forth in claim 1, wherein there is provided:

a wheel speed detection unit (25FL,25FR,25RL,25RR) which detects wheel speeds ($V_{FL}$, $V_{FR}$, $V_{RL}$, $V_{RR}$) of the vehicle; and
a final steering angle storage module (24) which stores a final absolute steering angle in an immediately preceding driving,
wherein the steering angle range estimation unit comprises:

a primary steering angle estimation module which roughly estimates a primary absolute steering angle based on the wheel speeds ($V_{FL}$, $V_{FR}$, $V_{RL}$, $V_{RR}$);
a temporary steering angle range calculation module which calculates a temporary steering angle range based on the stored final absolute steering angle, the detected sensor-steering-angle and the stored neutral point position; and
a secondary absolute steering angle estimation module which estimates a secondary absolute steering angle based on the temporary steering angle range, the detected sensor-steering-angle and the stored neutral point position,
wherein the steering angle range estimation unit outputs the temporary steering angle range as a final value when a deviation between the primary and secondary absolute steering angles falls within a predetermined value.

**Patentansprüche**

1. Vorrichtung zum Erfassen eines Absolut-Lenkwinkels, mit der ein Absolut-Lenkwinkel einer Lenk-Steuervorrichtung eines Fahrzeugs erfasst wird, wobei sie umfasst:

eine Lenkwinkel-Erfassungseinheit (18), die einen Sensor-Lenkwinkel auf Basis einer einzelnen Drehung der Lenk-Steuervorrichtung (2) erfasst, die als eine einzelne Periode verwendet wird;
eine Neutralpunkt-Speichereinheit (24), die eine durch die Lenkwinkel-Erfassungseinheit (18) an einem Lenkwinkel-Neutralpunkt des Lenkwinkels erfasste Neutralpunkt-Position speichert;
eine Lenkwinkelbereich-Schätzeinheit, die einen Lenkwinkelbereich schätzt, zu dem der aktuelle Lenkwinkel gehört, wobei sich der Lenkwinkelbereich zusammensetzt aus:

einem Neutral-Lenkwinkelbereich, der einer Periode entspricht, die die in der Neutralpunkt-Speichereinheit (24) gespeicherte Neutral-Position einschließt; und
einer Vielzahl von Links- und Rechts-Lenkwinkelbereichen, die an beiden Seiten des Neutral-Lenkwinkelbereiches ausgebildet sind; und
eine Einheit (26) zum Berechnen eines Absolut-Lenkwinkels, die einen Absolut-Lenkwinkel auf Basis des geschätzten Lenkwinkelbereiches, des erfassten Sensor-Lenkwinkels und der gespeicherten Neutralpunkt-Position berechnet.

2. Vorrichtung zum Erfassen eines Absolut-Lenkwinkels nach Anspruch 1, wobei die Neutralpunkt-Speichereinheit aus einem nichtflüchtigem Speicher (24) besteht.

3. Vorrichtung zum Erfassen eines Absolut-Lenkwinkels nach Anspruch 1, wobei die Lenkwinkelbereich-Schätzeinheit ein Lenkwinkelbereichverschiebungs-Steuermodul umfasst, das die Lenkwinkelbereiche ändert, wenn eine Änderung des erfassten Sensor-Lenkwinkels genauso groß ist wie oder größer als ein vorgegebener Schwellenwert.

4. Vorrichtung zum Erfassen eines Absolut-Lenkwinkels nach Anspruch 1, wobei die Lenkwinkelbereich-Schätzeinheit ein Lenkwinkelbereichverschiebungs-Steuermodul umfasst, das
eine Änderung des Ausgangs von der Lenkwinkel-Erfassungseinheit (18) berechnet und
die Lenkwinkelbereiche ändert, wenn die berechnete Änderung genauso groß ist wie oder größer als ein vorgegebener Schwellenwert.

5. Vorrichtung zum Erfassen eines Absolut-Lenkwinkels nach Anspruch 1, wobei
eine Radgeschwindigkeit-Erfassungseinheit (25FL, 25 FR, 25RL, 25RR) vorhanden ist, die Radgeschwindigkeiten des Fahrzeugs erfasst,
wobei die Lenkwinkelbereich-Schätzeinheit ein Lenkwinkel-Schätzmodul umfasst, das einen Absolut-Lenkwinkel auf Basis durch die Radgeschwindigkeit-Erfassungseinheit (25FL, 25 FR, 25RL, 25RR) erfasster Radgeschwindigkeiten grob schätzt, und
die Lenkwinkelbereich-Schätzeinheit den Lenkwinkelbereich, zu dem der aktuelle Lenkwinkel gehört, auf Basis des grob geschätzten Lenkwinkels schätzt.

6. Vorrichtung zum Erfassen eines Absolut-Lenkwinkels nach Anspruch 5, wobei die Lenkwinkel-Schätzeinheit umfasst:

ein erstes Lenkwinkel-Schätzmodul, das einen ersten geschätzten Lenkwinkel auf Basis von Radgeschwindigkeiten eines linken und eines rechten angetriebenen Rades berechnet,
ein zweites Lenkwinkel-Schätzmodul, das einen zweiten geschätzten Lenkwinkel auf Basis von Radgeschwindigkeiten eines linken und eines rechten antreibenden Rades berechnet, und
ein Modul zum Bestimmen eines geschätzten Lenkwinkels, das den ersten geschätzten Lenkwinkel als einen geschätzten Lenkwinkel bestimmt, wenn eine Abweichung zwischen dem berechneten ersten und zweiten Lenkwinkel geringer ist als ein vorgegebener Wert.

7. Vorrichtung zum Erfassen eines Absolut-Lenkwinkels nach Anspruch 5, wobei die Lenkwinkel-Schätzeinheit umfasst:

ein Fahrzeuggeschwindigkeits-Erfassungsmodul (17), das die Fahrzeuggeschwindigkeit (Vs) des Fahrzeugs erfasst; und
ein Rückstellmoment-Schätzmodul (40), das ein Rückstellmoment (SAT) des Fahrzeugs erfasst,
wobei ein geschätzter Lenkwinkel auf Basis der erfassten Fahrzeuggeschwindigkeit (Vs) und des erfassten Rückstellmomentes (SAT) geschätzt wird.

8. Vorrichtung zum Erfassen eines Absolut-Lenkwinkels nach Anspruch 7, wobei die Lenkwinkel-Schätzeinheit einen geschätzten Lenkwinkel berechnet, indem sie auf ein Kennfeld zum Berechnen eines geschätzten Lenkwinkels Bezug nimmt, das das Rückstellmoment (SAT) und die Fahrzeuggeschwindigkeit (Vs) als Parameter verwendet.

9. Vorrichtung zum Erfassen eines Absolut-Lenkwinkels nach Anspruch 1, wobei vorhanden sind:

   eine Radgeschwindigkeit-Erfassungseinheit (25FL, 25 FR, 25RL, 25RR), die Radgeschwindigkeiten ($V_{FL}$, $V_{FR}$, $V_{RL}$, $V_{RR}$) des Fahrzeugs erfasst; und
   ein Modul (24) zum Speichern eines abschließenden Lenkwinkels, das einen abschließenden Absolut-Lenkwinkel bei einer unmittelbar vorangehenden Fahrt speichert,
   wobei die Lenkwinkelbereich-Schätzeinheit umfasst:

   ein Modul zum Schätzen eines primären Lenkwinkels, das einen primären Absolut-Lenkwinkel auf Basis der Radgeschwindigkeiten ($V_{FL}$, $V_{FR}$, $V_{RL}$, $V_{RR}$) grob schätzt;
   ein Modul zum Berechnen eines temporären Lenkwinkelbereiches, das einen temporären Lenkwinkelbereich auf Basis des gespeicherten abschließenden Absolut-Lenkwinkels, des erfassten Sensor-Lenkwinkels und der gespeicherten Neutralpunkt-Position berechnet; und
   ein Modul zum Schätzen eines sekundären Absolut-Lenkwinkels, das einen sekundären Absolut-Lenkwinkel auf Basis des temporären Lenkwinkelbereiches, des erfassten Sensor-Lenkwinkels und der gespeicherten Neutralpunkt-Position schätzt,
   wobei die Lenkwinkelbereich-Schätzeinheit den temporären Lenkwinkelbereich als einen abschließenden Wert ausgibt, wenn die Abweichung zwischen dem primären und dem sekundären Absolut-Lenkwinkel innerhalb eines vorgegebenen Wertes liegt.

**Revendications**

1. Dispositif de détection d'angle de braquage absolu pour détecter l'angle de braquage absolu d'un dispositif de commande de braquage d'un véhicule, comprenant :

   une unité de détection d'angle de braquage (18) qui détecte un angle de braquage de capteur en se basant sur une rotation unique du dispositif de commande de braquage (2) utilisé comme une période unique ;
   une unité d'enregistrement de point neutre (24) qui enregistre une position de point neutre détectée par l'unité de détection d'angle de braquage (18) pour un point neutre d'angle de braquage de l'angle de braquage ;
   une unité d'estimation de plage d'angles de braquage qui estime la plage d'angles de braquage à laquelle appartient l'angle de braquage courant, dans lequel la plage d'angles de braquage est constituée :

   d'une plage d'angles de braquage neutres correspondant à une période incluant la position neutre enregistrée dans l'unité d'enregistrement de point neutre (24) ; et
   d'une pluralité de plages d'angle de braquage à droite et à gauche qui sont formées de part et d'autre de la plage d'angles de braquage neutres ; et
   d'une unité de calcul d'angle de braquage absolu (26) qui calcule l'angle de braquage absolu en se basant sur la plage d'angles de braquage estimée, l'angle de braquage de capteur détecté et la position de point neutre enregistrée.

2. Dispositif de détection d'angle de braquage absolu selon la revendication 1, dans lequel
   l'unité d'enregistrement de point neutre est constituée d'une mémoire non volatile (24).

3. Dispositif de détection d'angle de braquage absolu selon la revendication 1, dans lequel
   l'unité d'estimation de plages d'angle de braquage comprend un module contrôleur de décalage de plage d'angles de braquage qui modifie les plages d'angles de braquage lorsque la variation de l'angle de braquage de capteur détecté est supérieure ou égale à une valeur de seuil prédéterminée.

4. Dispositif de détection d'angle de braquage absolu selon la revendication 1, dans lequel
   l'unité d'estimation de plages d'angle de braquage comprend un module contrôleur de décalage de plage d'angles de braquage qui
   calcule la variation de sortie de l'unité de détection d'angle de braquage (18) et
   modifie les plages d'angles de braquage lorsque la variation calculée est supérieure ou égale à une valeur de seuil prédéterminée.

**5.** Dispositif de détection d'angle de braquage absolu selon la revendication 1, dans lequel
il est fourni une unité de détection de vitesse de roue (25FL, 25FR, 25RL, 25RR) qui détecte les vitesses des roues du véhicule,
dans lequel l'unité d'estimation de plage d'angles de braquage comprend un module d'estimation d'angle de braquage qui estime grossièrement l'angle de braquage absolu en se basant sur les vitesses de roues détectées par l'unité de détection de vitesse de roue (25FL, 25FR, 25RL, 25RR), et
l'unité d'estimation de plage d'angles de braquage estime la plage d'angles de braquage à laquelle appartient l'angle de braquage courant en se basant sur l'angle de braquage grossièrement estimé.

**6.** Dispositif de détection d'angle de braquage absolu selon la revendication 5, dans lequel
l'unité d'estimation d'angle de braquage comprend :

un premier module d'estimation d'angle de braquage qui calcule un premier angle de braquage estimé en se basant sur les vitesses de roues des roues motrices gauche et droite,
un deuxième module d'estimation d'angle de braquage qui calcule un deuxième angle de braquage estimé en se basant sur les vitesses de roues des roues motrices gauche et droite, et
un module de détermination d'angle de braquage estimé qui détermine le premier angle de braquage estimé comme angle de braquage estimé lorsque l'écart entre les premier et deuxième angles de braquage calculés est inférieur à une valeur prédéterminée.

**7.** Dispositif de détection d'angle de braquage absolu selon la revendication 5, dans lequel
l'unité d'estimation d'angle de braquage comprend :

un module de détection de vitesse de véhicule (17) qui détecte la vitesse de véhicule (Vs) du véhicule ; et
un module d'estimation de couple d'auto-alignement (40) qui détecte le couple d'auto-alignement (SAT) du véhicule,
dans lequel l'angle de braquage estimé est estimé en se basant sur la vitesse du véhicule détectée (Vs) et le couple d'auto-alignement détecté (SAT).

**8.** Dispositif de détection d'angle de braquage absolu selon la revendication 7, dans lequel
l'unité d'estimation d'angle de braquage calcule l'angle de braquage estimé en se référant à une carte de calcul d'angle de braquage estimé qui utilise comme paramètres le couple d'auto-alignement (SAT) et la vitesse du véhicule (Vs).

**9.** Dispositif de détection d'angle de braquage absolu selon la revendication 1, dans lequel
il est fourni :

une unité de détection de vitesse de roue (25FL, 25FR, 25RL, 25RR) qui détecte les vitesses des roues ($V_{FL}$, $V_{FR}$, $V_{RL}$, $V_{RR}$) du véhicule ; et
un module d'enregistrement d'angle de braquage final (24) qui enregistre l'angle de braquage absolu final lors d'une conduite qui vient d'avoir lieu,
dans lequel l'unité d'estimation de plage d'angles de braquage comprend :

un module d'estimation d'angle de braquage primaire qui estime grossièrement l'angle de braquage absolu primaire en se basant sur les vitesses de roues ($V_{FL}$, $V_{FR}$, $V_{RL}$, $V_{RR}$) ;
un module de calcul de plage d'angles de braquage temporaires qui calcule une plage d'angles de braquage temporaires en se basant sur l'angle de braquage absolu final enregistré, l'angle de braquage du capteur détecté et la position de point neutre enregistrée ; et
un module d'estimation d'angle de braquage absolu secondaire qui estime l'angle de braquage absolu secondaire en se basant sur la plage d'angles de braquage temporaires, l'angle de braquage de capteur détecté et la position de point neutre enregistrée,
dans lequel l'unité d'estimation de plage d'angles de braquage délivre en sortie la plage d'angles de braquage temporaires en tant que valeur finale lorsque l'écart entre les angles de braquage absolus primaire et secondaire appartient à une valeur prédéterminée.

FIG. 1

EP 1 923 299 B1

## FIG. 2

## FIG. 3

## FIG. 4

STEERING ANGLE SENSOR OUTPUT VALUE; $\theta$d(n)

FIG. 5

EP 1 923 299 B1

## FIG. 6

START AN INITIAL TURN NUMBER
DETERMINING OPERATION

READ RESPECTIVE WHEEL SPEEDS $V_{FL}$ TO $V_{RR}$ — S0

S1
IS THE VEHICLE
TRAVELING? — NO

YES

CALCULATE A FIRST ESTIMATED STEERING ANGLE
$\theta_{estF}$ AND A SECOND ESTIMATED STEERING ANGLE
$\theta_{estR}$ BASED ON THE WHEEL SPEEDS $V_{FL}$ TO $V_{RR}$ — S2

$\Delta\theta_{est} = |\theta_{estF} - \theta_{estR}|$ — S3

S4
$\Delta\theta_{est} \leqq \Delta\theta_s$? — NO

YES

READ A STEERING ANGLE SENSOR OUTPUT VALUE
$\theta_d(n)$ AND A NEUTRAL POINT DETECTION VALUE $\theta_{d0}$ — S5

S6
Cnt = 0? — YES

S7
ESTIMATE AN INITIAL TURN
NUMBER n BASED ON THE FIRST
ESTIMATED STEERING ANGLE $\theta_{estF}$

NO

S8 $\Delta\theta_d = \theta_d(n) - \theta_d(n-1)$

S9
$\Delta\theta_d < -a$? — NO

S11
$\Delta\theta_d > +a$? — NO

S16
RESET THE COUNT
VALUE Cnt TO "0"

YES

S10 n=n+1

YES
S12 n=n-1

S13
CALCULATE AN ABSOLUTE STEERING ANGLE $\theta$

S17 Cnt=Cnt+1

$\Delta\theta_F = |\theta - \theta_{estF}|$ $\Delta\theta_R = |\theta - \theta_{estR}|$

S18
Cnt > K? — NO

S14
S15
$\Delta\theta_F < \Delta\theta_{error}$ &
$\Delta\theta_{FR} < \Delta\theta_{error}$? — NO

YES
S19
DETERMINE AN INITIAL TURN NUMBER $n_{int}$

YES

END

# FIG. 7

START A TIMER
INTERRUPTION OPERATION

S21 — IS IT A FIRST OPERATION? — NO

YES

S22 — HAS THE INITIAL TURN NUMBER $n_{int}$ BEEN DETERMINED? — NO

YES

S23 — READ THE INITIAL TURN NUMBER $n_{int}$

S24 — READ THE STEERING ANGLE SENSOR OUTPUT VALUE $\theta d (n)$ AND THE NEUTRAL POINT DETECTION VALUE $\theta d0$

S25 — $\Delta \theta d = \theta d(n) - \theta d(n-1)$

S26 — $\Delta \theta d < -a$? — NO

YES

S28 — $\Delta \theta d > +a$? — NO

YES

S27 — $n = n+1$

S29 — $n = n-1$

S30 — CALCULATE AN ABSOLUTE STEERING ANGLE $\theta$

RETURN

## FIG. 8(a)

STEERING ANGLE SENSOR OUTPUT VALUE $\theta$ d

$\theta$ d(n-1)

$\theta$ d(n)

$\Delta \theta d = \theta d(n) - \theta d(n-1) < -a$
$n = n+1$

## FIG. 8(b)

STEERING ANGLE SENSOR OUTPUT VALUE $\theta$ d

$\theta$ d(n)

$\theta$ d(n-1)

$\Delta \theta d = \theta d(n) - \theta d(n-1) > +a$
$n = n-1$

## FIG. 9

STEERING WHEEL RETURN
BASIC CURRENT VALUE

Ir

STEERING ANGLE

30

ABSOLUTE STEERING ANGLE $\theta$

Ir

32

Ir·Gv

33

a

b

X0

HR

34

VEHICLE SPEED SENSITIVE GAIN

Gv

31

VEHICLE SPEEE

VEHICLE SPEED

Gv

SW

ABSOLUTE STEERING ANGLE SPEED $\omega$

SIGN DETERMINATION CIRCUIT

35

# FIG. 10

EP 1 923 299 B1

## FIG. 11

## FIG. 12

## FIG. 13

START AN INITIAL TURN NUMBER
DETERMINING OPERATION

READ VEHICLE SPEED Vs AND SELF-ALIGNING
TORQUE SAT — S31

CALCULATE AN ESTIMATED STEERING ANGLE $\theta_{est}$
BASED ON THE VEHICLE SPEED Vs AND
SELF-ALIGNING TORQUE SAT — S33

READ A STEERING ANGLE SENSOR OUTPUT VALUE
$\theta d(n)$ AND A NEUTRAL POINT DETECTION VALUE $\theta d0$ — S34

S35
Cnt = 0? — YES

S36
ESTIMATE AN INITIAL TURN
NUMBER n BASED ON THE
ESTIMATED STEERING ANGLE $\theta_{est}$

NO

$\Delta \theta d = \theta d(n) - \theta d(n-1)$ — S37

$\Delta \theta d < -a$? — NO
S38
YES

S40
$\Delta \theta d > +a$? — NO

$n = n+1$ — S39

YES
S41
$n = n-1$

S42
CALCULATE AN ABSOLUTE STEERING ANGLE $\theta$

S45
RESET THE COUNT
VALUE Cnt TO "0"

$\Delta \theta = |\theta - \theta_{est}|$ — S43

S44
$\Delta \theta < \Delta \theta_{error}$? — NO

YES
Cnt = Cnt+1 — S46

S47
NO — Cnt > K?
YES

DETERMINE AN INITIAL TURN NUMBER $n_{int}$ — S48

END

# FIG. 14

ESTIMATED STEERING ANGLE $\theta_{est}$

VEHICLE SPEED
Vs INCREASES

SAT

## FIG. 15

EP 1 923 299 B1

# FIG. 16

START AN ABSOLUTE STEERING
ANGLE STORING OPERATION

READ A SWITCH SIGNAL OF
AN IGNITION SWITCH                    S51

IS THE
STATUS OF THE                      S52
IGNITION SWITCH FROM       NO
ON TO OFF?

RETURN

YES

READ THE ABSOLUTE STEERING
ANGLE STORED IN A RAM AND          S53
STORE IT IN THE NON-VOLATILE
MEMORY AS A FINAL ABSOLUTE
STEERING ANGLE $\theta$e

END

# FIG. 17

START AN INITIAL TURN NUMBER
DETERMINING OPERATION

READ THE FINAL ABSOLUTE STEERING ANGLE $\theta e$
AND THE NEUTRAL POINT DETECTION VALUE $\theta d0$ — S61

READ THE STEERING ANGLE SENSOR OUTPUT
VALUE $\theta d(n)$ — S62

CALCULATE A TURN NUMBER n WHICH SATISFIES
$\theta e - (\theta d - \theta d0) + n \cdot 360 < 180$ — S63

Cnt=1 — S64

READ RESPECTIVE WHEELS SPEEDS $V_{FL}$ TO $V_{RR}$ — S0

IS THE VEHICLE
TRAVELING? — S1    NO

YES

CALCULATE A FIRST ESTIMATED STEERING ANGLE $\theta_{estF}$
AND A SECOND ESTIMATED STEERING ANGLE $\theta_{estR}$
BASED ON THE WHEEL SPEEDS $V_{FL}$ TO $V_{RR}$ — S2

$\Delta \theta_{est} = | \theta_{estF} - \theta_{estR} |$ — S3

$\Delta \theta_{est} \leqq \Delta \theta_{s}?$ — S4    NO

YES

READ A STEERING ANGLE SENSOR OUTPUT
VALUE $\theta d(n)$ — S5

(CONT.)

34

(FIG. 17 CONTINUED)

S6 — Cnt = 0? — YES → S7 ESTIMATE AN INITIAL TURN NUMBER n BASED ON THE FIRST ESTIMATED STEERING ANGLE $\theta_{estF}$

NO

S8 — $\Delta\theta d = \theta d(n) - \theta d(n-1)$

S9 — $\Delta\theta d < -a$? — NO → S11 $\Delta\theta d > +a$? — NO

YES

YES

S10 — $n = n+1$

S12 — $n = n-1$

S13 — CALCULATE AN ABSOLUTE STEERING ANGLE $\theta$

S16 — RESET THE COUNT VALUE Cnt TO "0"

S14 — $\Delta\theta_F = |\theta - \theta_{estF}|$
$\Delta\theta_R = |\theta - \theta_{estR}|$

S15 — $\Delta\theta_F < \Delta\theta_{error}$ & $\Delta\theta_{FR} < \Delta\theta_{error}$? — NO

YES

S17 — Cnt = Cnt+1

S18 — Cnt > K? — NO

YES

S19 — DETERMINE AN INITIAL TURN NUMBER $n_{int}$

END

35

# FIG. 18

EP 1 923 299 B1

*FIG. 19*

```
        ╭─────────────────────────────────╮
        │  START AN INITIAL TURN NUMBER   │
        │      DETERMINING OPERATION      │
        ╰─────────────────────────────────╯
                        │
                        ▼
        ┌─────────────────────────────────┐  ┌─ S61
        │ READ THE FINAL ABSOLUTE STEERING │
        │ ANGLE θe AND THE NEUTRAL POINT   │
        │ DETECTION VALUE θd0              │
        └─────────────────────────────────┘
                        │
                        ▼
        ┌─────────────────────────────────┐  ┌─ S62
        │ READ THE STEERING ANGLE SENSOR   │
        │ OUTPUT VALUE θd(n)               │
        └─────────────────────────────────┘
                        │
                        ▼
        ┌─────────────────────────────────┐  ┌─ S63
        │ CALCULATE A TURN NUMBER n WHICH  │
        │ SATISFIES θe-(θd-θd0)+n·360<180  │
        └─────────────────────────────────┘
                        │
                        ▼
            ┌───────────────────┐  ┌─ S64
            │      Cnt=1        │
            └───────────────────┘
```

- READ THE FINAL ABSOLUTE STEERING ANGLE $\theta e$ AND THE NEUTRAL POINT DETECTION VALUE $\theta d0$ — S61
- READ THE STEERING ANGLE SENSOR OUTPUT VALUE $\theta d(n)$ — S62
- CALCULATE A TURN NUMBER n WHICH SATISFIES $\theta e - (\theta d - \theta d0) + n \cdot 360 < 180$ — S63
- Cnt=1 — S64
- READ VEHICLE SPEED Vs AND SELF-ALIGNING TORQUE SAT — S31
- CALCULATE AN ESTIMATED STEERING ANGLE $\theta_{est}$ BASED ON THE VEHICLE SPEED Vs AND SELF-ALIGNING TORQUE SAT — S33
- READ A STEERING ANGLE SENSOR OUTPUT VALUE $\theta d(n)$ AND A NEUTRAL POINT DETECTION VALUE $\theta d0$ — S34
- Cnt = 0? — S35
  - YES → ESTIMATE AN INITIAL TURN NUMBER n BASED ON THE ESTIMATED STEERING ANGLE $\theta_{est}$ — S36
  - NO → $\Delta \theta d = \theta d(n) - \theta d(n-1)$ — S37
- $\Delta \theta d < -a$? — S38
  - YES → n=n+1 — S39
  - NO → $\Delta \theta d > +a$? — S40
    - YES → n=n-1 — S41
    - NO →
- CALCULATE AN ABSOLUTE STEERING ANGLE $\theta$ — S42
- $\Delta \theta = | \theta - \theta_{est} |$ — S43
- $\Delta \theta < \Delta \theta_{error}$? — S44
  - YES → Cnt=Cnt+1 — S46
  - NO →
- RESET THE COUNT VALUE Cnt TO "0" — S45
- Cnt > K? — S47
  - NO →
  - YES → DETERMINE AN INITIAL TURN NUMBER $n_{int}$ — S48
- END

# FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1666837 A1